# EUROPEAN PATENT APPLICATION

(11) **EP 4 657 906 A1**
(43) Date of publication of application: **03.12.2025**
(21) Application number: 23920756.6
(22) Date of filing: 27.10.2023
(51) Int. Cl.: H04W 8/24

(54) **CAPABILITY INFORMATION TRANSMISSION METHOD AND COMMUNICATION APPARATUS**

(30) Priority: 08.02.2023 CN 202310146899
(71) Applicant: Huawei Technologies Co., Ltd., Shenzhen, Guangdong 518129 (CN)
(72) Inventor: SHA, Tong, Shenzhen, Guangdong 518129 (CN); LI, Bingzhao, Shenzhen, Guangdong 518129 (CN); ZHAO, Yang, Shenzhen, Guangdong 518129 (CN); KUANG, Yiru, Shenzhen, Guangdong 518129 (CN)
(74) Representative: Körber, Martin Hans
(86) International application number: PCT/CN2023/127350
(87) International publication number: WO 2024/164564

(57) **Abstract**

A capability information transmission method and a communication apparatus are provided. A terminal device explicitly or implicitly indicates, to a network device, that the terminal device supports or does not support a capability filtering enquiry, to help the network device determine that the terminal device does not support capability filtering. This ensures that the terminal device and the network device have a consistent understanding of whether the terminal device supports the capability filtering. When the terminal device does not support band capability filtering, the terminal device does not perform capability filtering, to implement low complexity, low costs, and low energy consumption of the terminal device. A capability enquiry without a filter condition may be used by the network device, so that a size of capability enquiry information can be reduced, consumption of communication resources can be reduced, and air interface resource overheads can be reduced. In addition, the network device may determine that a capability reported by the terminal device is a full capability.

## Description

This application claims priority to Chinese Patent Application No. 202310146899.7, filed with the China National Intellectual Property Administration on February 8, 2023 and entitled "CAPABILITY INFORMATION TRANSMISSION METHOD AND COMMUNICATION APPARATUS", which is incorporated herein by reference in its entirety.

### TECHNICAL FIELD

This application relates to the communication field, and more specifically, to a capability information transmission method and a communication apparatus.

### BACKGROUND

In a wireless communication system, a network device needs to obtain capability information of a terminal device. For example, the capability information of the terminal device may include capability information of the terminal device in one or more radio access technologies (radio access technologies, RATs). The network device may send capability enquiry information to the terminal device. After receiving a capability enquiry request from the network device, the terminal device reports the capability information of the terminal device to the network device. After obtaining the capability information of the terminal device, the network device may perform appropriate scheduling based on a capability of the terminal device, to ensure correct data processing.

Given that a band supported by a network device is limited during network deployment, to reduce a length of a capability information bitstream, it is required in a conventional technology that an enquiry with band filtering be used when the network device enquires a capability of a terminal device. The terminal device capability enquiry request (a UE capability enquiry) delivered by the network device may include filter information (or may also be referred to as a filter condition). The terminal device only needs to send, to the network device, capability information indicated by the filter information, and the terminal device does not need to send, to the network device, capability information that is not indicated by the filter information. In addition, the terminal device needs to backfill, in the reported capability information of the terminal device, a frequency band list filter condition (namely, band filter information) used by the network device for enquiry.

An important goal of 5G is to enable the connected industry, which is oriented to large-scale industrial wireless sensors (such as pressure sensors and humidity sensors), surveillance cameras, wearable devices (such as smart watches and electronic health-related devices), and medical monitoring devices for public safety application that are all required to have features of low device complexity, a small size, and a long battery life. Such a device may be referred to as a reduced capability terminal device (reduced capability UE, REDCAP UE), and has a low hardware capability.

In the conventional technology, when a capability enquiry with the filter condition is used by the network device, the terminal device needs to report a capability obtained through filtering, and backfill the same filter condition in the capability information of the terminal device. Because the REDCAP UE does not support a carrier aggregation operation, the REDCAP UE reports much fewer band combinations than non-REDCAP UE. Therefore, a gain of performing band capability filtering by the REDCAP UE is not significant.

Therefore, to meet low complexity and low costs of the REDCAP UE, how the network device enquires a capability of the REDCAP UE and how the REDCAP UE reports the capability of the REDCAP UE are problems that need to be resolved currently.

### SUMMARY

This application provides a capability information transmission method and a communication apparatus. A terminal device explicitly or implicitly indicates, to a network device, that the terminal device supports or does not support a capability filtering enquiry, to help the network device determine that the terminal device does not support capability filtering. This ensures that the terminal device and the network device have a consistent understanding of whether the terminal device supports the capability filtering, and ensures interoperability and compatibility between the terminal device and the network device. The network device may determine that the terminal device reports a full capability, so that the network device may not perform a secondary capability enquiry on the terminal device, thereby reducing communication resource overheads.

According to a first aspect, a capability information transmission method is provided. The method may be performed by a network device, may be performed by a chip, a chip system, or a processor that supports the network device in implementing the method, or may be performed by a logical node, a logical module, software, or the like that can implement all or some functions of the network device. The method includes: determining that a terminal device does not support capability filtering; sending first capability enquiry information to the terminal device; receiving capability information from the terminal device; and determining, based on the terminal device not supporting the capability filtering, that the capability information includes all frequency band combination capabilities supported by the terminal device.

According to the capability information transmission method provided in the first aspect, it is ensured that the terminal device and the network device have a consistent understanding of whether the terminal device supports the capability filtering, and interoperability and compatibility between the terminal device and the network device are ensured. The network device may determine that the terminal device reports a full capability, so that the network device may not perform a secondary capability enquiry on the terminal device, thereby reducing communication resource overheads.

For example, the terminal device may be enhanced REDCAP UE or REDCAP UE.

In a possible implementation of the first aspect, before sending the first capability enquiry information to the terminal device, the method further includes: receiving first indication information from the terminal device, where the first indication information indicates that the terminal device does not support the capability filtering; and determining that the terminal device does not support the capability filtering includes: determining, based on the first indication information, that the terminal device does not support the capability filtering. In this implementation, that the terminal device does not support the capability filtering, a capability reported by the terminal device is the full capability or an unfiltered capability, or the terminal device does not perform a capability filtering procedure is indicated to the network device by using the indication information, so that the network device determines that the terminal device does not support the capability filtering. This ensures that the terminal device and the network device have a consistent understanding of whether the terminal device supports the capability filtering, and ensures interoperability and compatibility between the terminal device and the network device.

In a possible implementation of the first aspect, the first indication information is carried in an RRC connection setup request message or an RRC connection setup complete message. In this implementation, existing signaling may be used to carry the indication information, to reduce overheads of the indication information and improve communication resource utilization.

In a possible implementation of the first aspect, before sending the first capability enquiry information to the terminal device, the method further includes: sending second capability enquiry information to the terminal device, where the second capability enquiry information includes a filter condition, and the filter condition indicates the terminal device to report capability information of the terminal device based on the filter condition; and receiving capability enquiry failure information from the terminal device, where the capability enquiry failure information includes indication information indicating that the terminal device does not support the capability filtering; and determining that the terminal device does not support the capability filtering includes: determining, based on the capability enquiry failure information, that the terminal device does not support the capability filtering. In this implementation, that the terminal device does not support the capability filtering, a capability reported by the terminal device is the full capability or an unfiltered capability, or the terminal device does not perform a capability filtering procedure is indicated to the network device by using the capability enquiry failure information, so that the network device determines that the terminal device does not support the capability filtering. This ensures that the terminal device and the network device have a consistent understanding of whether the terminal device supports the capability filtering, and ensures interoperability and compatibility between the terminal device and the network device.

In a possible implementation of the first aspect, determining that the terminal device does not support the capability filtering includes: determining that the terminal device is a first-type terminal device, where the first-type terminal device is a terminal device that does not support the capability filtering. In this implementation, it is specified that the first-type terminal device does not perform capability filtering, and the network device determines, based on a type of the terminal device, that the terminal device does not support a band capability. This ensures that the terminal device and the network device have a consistent understanding of whether the terminal device supports the capability filtering, and ensures interoperability and compatibility between the terminal device and the network device.

In a possible implementation of the first aspect, the first capability enquiry information does not include a filter condition, and the filter condition indicates the terminal device to report capability information of the terminal device based on the filter condition.

In a possible implementation of the first aspect, the filter condition includes a frequency filter condition, and the frequency filter condition indicates the terminal device to report, based on the frequency filter condition, a frequency band combination capability supported by the terminal device.

For example, the frequency filter condition is indicated by a "frequencyBandListFilter" field in the first capability enquiry information (for example, a UE capability enquiry).

In a possible implementation of the first aspect, the capability information does not include a filter condition applied to the terminal device, and that the capability information does not include a filter condition applied to the terminal device indicates that the terminal device does not support the capability filtering; and determining that the terminal device does not support the capability filtering includes: determining, based on the capability information, that the terminal device does not support the capability filtering. In this implementation, the capability information does not include the filter condition applied to the terminal device, to indicate that the terminal device does not support the capability filtering, so that the network device determines that the terminal device does not support the band capability. This ensures that the terminal device and the network device have a consistent understanding of whether the terminal device supports the capability filtering, and ensures interoperability and compatibility between the terminal device and the network device.

In a possible implementation of the first aspect, the first capability enquiry information includes a filter condition, and the filter condition indicates the terminal device to report capability information of the terminal device based on the filter condition.

In a possible implementation of the first aspect, the filter condition applied to the terminal device includes a frequency filter condition applied to the terminal device, where the frequency filter condition applied to the terminal device is used to filter a frequency band combination capability to be reported by the terminal device.

For example, the frequency filter condition applied to the terminal device is indicated by "appliedFreqBandListFilter" in capability information (for example, UECapabilityInformation).

In a possible implementation of the first aspect, the capability information includes second indication information, the second indication information indicates that the terminal device is a first-type terminal device, and the first-type terminal device is a terminal device that does not support the capability filtering; and determining that the terminal device does not support the capability filtering includes: determining, based on the second indication information, that the terminal device does not support the capability filtering. In this implementation, it is specified that the first-type terminal device does not perform capability filtering, and the terminal device indicates, to the network device in the capability information, that the terminal device is the first-type terminal device, so that the network device determines that the terminal device does not support a band capability. This ensures that the terminal device and the network device have a consistent understanding of whether the terminal device supports the capability filtering, and ensures interoperability and compatibility between the terminal device and the network device.

In a possible implementation of the first aspect, the capability information includes a frequency filter condition field applied to the terminal device and third indication information, the frequency filter condition field applied to the terminal device indicates all supported bands of the terminal device, and the third indication information indicates that the frequency filter condition field applied to the terminal device indicates all the supported bands of the terminal device; and determining that the terminal device does not support the capability filtering includes: determining, based on the third indication information, that the capability information includes all the frequency band combination capabilities supported by the terminal device. In this implementation, the "appliedFreqBandListFilter" field in the capability information is used to carry all the supported bands of the terminal device, and the capability information indicates, by using the indication information, that the "appliedFreqBandListFilter" field carries all the supported bands of the terminal device. This ensures that the terminal device and the network device have a consistent understanding of whether the terminal device supports the capability filtering, and ensures interoperability and compatibility between the terminal device and the network device. In addition, compatibility between the terminal device and the network device can be improved, and a probability of triggering the secondary capability enquiry by the network device (for example, a network device implemented in a 3GPP R17 protocol version) is reduced to some extent.

In a possible implementation of the first aspect, the method further includes: sending the capability information to a second network device. In this implementation, when the terminal device moves to a cell managed by another network device (not limited to a first network device) in a same RNA, if the another network device (for example, the second network device) can obtain the capability information of the terminal device from the first network device or a core network device, and may determine, based on the capability information including the indication information and/or not including the filter condition, that the terminal device does not perform capability filtering, and the capability information of the terminal device is the full capability, the another network device does not trigger a capability enquiry procedure again either, thereby avoiding signaling overheads caused by repeated capability enquiry and reporting.

According to a second aspect, a capability information transmission method is provided. The method may be performed by a terminal device, or may be performed by a chip, a chip system, a processor, or the like that supports the terminal device in implementing the method. The method includes: receiving first capability enquiry information from a first network device; and sending capability information to the first network device in response to the first capability enquiry information, where the capability information includes all frequency band combination capabilities supported by the terminal device.

According to the capability information transmission method provided in the second aspect, when a capability of the terminal device is reported to the first network device, capability filtering may not be performed, so that all the frequency band combination capabilities supported by the terminal device are reported to the network device. In this way, implementation complexity of a communication apparatus can be reduced, and costs of the terminal device can be reduced. In addition, the network device may either not perform a secondary capability enquiry on the terminal device, thereby reducing signaling overheads and communication resource overheads caused by repeated enquiry and reporting of the capability information of the terminal device.

In a possible implementation of the second aspect, before receiving the first capability enquiry information from the first network device, the method further includes: sending first indication information to the first network device, where the first indication information indicates that the terminal device does not support capability filtering. In this implementation, that the terminal device does not support the capability filtering, the capability reported by the terminal device is a full capability or an unfiltered capability, or the terminal device does not perform a capability filtering procedure is indicated to the network device by using the indication information, so that the network device determines that the terminal device does not support the capability filtering. This ensures that the terminal device and the network device have a consistent understanding of whether the terminal device supports the capability filtering, and ensures interoperability and compatibility between the terminal device and the network device.

In a possible implementation of the second aspect, the first indication information is carried in an RRC connection setup request message or an RRC connection setup complete message.

In a possible implementation of the second aspect, before receiving the first capability enquiry information from the first network device, the method further includes: receiving second capability enquiry information from the first network device, where the second capability enquiry information includes a filter condition, and the filter condition indicates the terminal device to report capability information of the terminal device based on the filter condition; and sending, by the terminal device, capability enquiry failure information to the first network device in response to the second capability enquiry information, where the capability enquiry failure information includes indication information indicating that the terminal device does not support capability filtering. In this implementation, that the terminal device does not support the capability filtering, a capability reported by the terminal device is the full capability or an unfiltered capability, or the terminal device does not perform a capability filtering procedure is indicated to the network device by using the capability enquiry failure information, so that the network device determines that the terminal device does not support the capability filtering. This ensures that the terminal device and the network device have a consistent understanding of whether the terminal device supports the capability filtering, and ensures interoperability and compatibility between the terminal device and the network device.

In a possible implementation of the second aspect, before receiving the first capability enquiry information from the first network device, the method further includes: sending fourth indication information to the first network device, where the fourth indication information indicates that the terminal device is a first-type terminal device, and the first-type terminal device is a terminal device that does not support capability filtering. In this implementation, it is specified that the first-type terminal device does not perform capability filtering, and the terminal device indicates to the network device that the terminal device is the first-type terminal device, so that the network device determines that the terminal device does not support a band capability. This ensures that the terminal device and the network device have a consistent understanding of whether the terminal device supports the capability filtering, and ensures interoperability and compatibility between the terminal device and the network device.

In a possible implementation of the second aspect, the first capability enquiry information does not include a filter condition, and the filter condition indicates the terminal device to report capability information of the terminal device based on the filter condition.

For example, the frequency filter condition is indicated by a "frequencyBandListFilter" field in the first capability enquiry information (for example, a UE capability enquiry).

In a possible implementation of the second aspect, the filter condition includes a frequency filter condition, and the frequency filter condition indicates the terminal device to report, based on the frequency filter condition, a frequency band combination capability supported by the terminal device.

In a possible implementation of the second aspect, the capability information does not include a filter condition applied to the terminal device, and that the capability information does not include the filter condition applied to the terminal device indicates that the terminal device does not support capability filtering. In this implementation, the capability information does not include the filter condition applied to the terminal device, to indicate that the terminal device does not support the capability filtering, so that the network device determines that the terminal device does not support a band capability. This ensures that the terminal device and the network device have a consistent understanding of whether the terminal device supports the capability filtering, and ensures interoperability and compatibility between the terminal device and the network device.

In a possible implementation of the second aspect, the first capability enquiry information includes a filter condition, and the filter condition indicates the terminal device to report capability information of the terminal device based on the filter condition.

In a possible implementation of the second aspect, the filter condition applied to the terminal device includes a frequency filter condition applied to the terminal device, where the frequency filter condition applied to the terminal device is used to filter a frequency band combination capability to be reported by the terminal device.

For example, the frequency filter condition applied to the terminal device is indicated by "appliedFreqBandListFilter" in capability information (for example, UECapabilityInformation).

In a possible implementation of the second aspect, the capability information includes second indication information, the second indication information indicates that the terminal device is a first-type terminal device, and the first-type terminal device is a terminal device that does not support capability filtering. In this implementation, it is specified that the first-type terminal device does not perform capability filtering, and the terminal device indicates, to the network device in the capability information, that the terminal device is the first-type terminal device, so that the network device determines that the terminal device does not support a band capability. This ensures that the terminal device and the network device have a consistent understanding of whether the terminal device supports the capability filtering, and ensures interoperability and compatibility between the terminal device and the network device.

In a possible implementation of the second aspect, the capability information includes a frequency filter condition field applied to the terminal device and third indication information, the frequency filter condition field applied to the terminal device indicates all supported bands of the terminal device, and the third indication information indicates that the frequency filter condition field applied to the terminal device indicates all the supported bands of the terminal device. In this implementation, the "appliedFreqBandListFilter" field in the capability information is used to carry all the supported bands of the terminal device, and the capability information indicates, by using the indication information, that the "appliedFreqBandListFilter" field carries all the supported bands of the terminal device. This ensures that the terminal device and the network device have a consistent understanding of whether the terminal device supports the capability filtering, and ensures interoperability and compatibility between the terminal device and the network device. In addition, compatibility between the terminal device and the network device can be improved, and a probability of triggering the secondary capability enquiry by the network device (for example, a network device implemented in a 3GPP R17 protocol version) is reduced to some extent.

According to a third aspect, a communication apparatus is provided. The apparatus may be a network device, may be a chip, a chip system, a processor, or the like in the network device, or may be a logical node, a logical module, software, or the like that can implement all or some functions of the network device. The apparatus includes a processing module and an interface module (the interface module may also be referred to as a communication module or the like). The interface module is configured to perform specific signal receiving and sending under driving of the processing module. The processing module is configured to determine that a terminal device does not support capability filtering. The interface module is configured to send first capability enquiry information to the terminal device. The interface module is further configured to receive capability information from the terminal device. The processing module is further configured to determine, based on the terminal device not supporting the capability filtering, that the capability information includes all frequency band combination capabilities supported by the terminal device.

According to the communication apparatus provided in the third aspect, it is ensured that the terminal device and the communication apparatus have a consistent understanding of whether the terminal device supports the capability filtering, and interoperability and compatibility between the terminal device and the communication apparatus are ensured. The communication apparatus may determine that the terminal device reports a full capability, so that a secondary capability enquiry may not be performed on the terminal device, thereby reducing communication resource overheads.

In a possible implementation of the third aspect, before the interface module sends the first capability enquiry information to the terminal device, the interface module is further configured to receive first indication information from the terminal device, where the first indication information indicates that the terminal device does not support the capability filtering; and the processing module is further configured to determine, based on the first indication information, that the terminal device does not support the capability filtering.

In a possible implementation of the third aspect, the first indication information is carried in an RRC connection setup request message or an RRC connection setup complete message.

In a possible implementation of the third aspect, before the interface module sends the first capability enquiry information to the terminal device, the interface module is further configured to: send second capability enquiry information to the terminal device, where the second capability enquiry information includes a filter condition, and the filter condition indicates the terminal device to report capability information of the terminal device based on the filter condition; and receive capability enquiry failure information from the terminal device, where the capability enquiry failure information includes indication information indicating that the terminal device does not support the capability filtering. The processing module is further configured to determine, based on the capability enquiry failure information, that the terminal device does not support the capability filtering.

In a possible implementation of the third aspect, the processing module is further configured to determine that the terminal device is a first-type terminal device, where the first-type terminal device is a terminal device that does not support the capability filtering.

In a possible implementation of the third aspect, the first capability enquiry information does not include a filter condition, and the filter condition indicates the terminal device to report capability information of the terminal device based on the filter condition.

In a possible implementation of the third aspect, the filter condition includes a frequency filter condition, and the frequency filter condition indicates the terminal device to report, based on the frequency filter condition, a frequency band combination capability supported by the terminal device.

For example, the frequency filter condition is indicated by a "frequencyBandListFilter" field in the first capability enquiry information (for example, a UE capability enquiry).

In a possible implementation of the third aspect, the capability information does not include a filter condition applied to the terminal device, and that the capability information does not include a filter condition applied to the terminal device indicates that the terminal device does not support the capability filtering. The processing module is further configured to determine, based on the capability information, that the terminal device does not support the capability filtering.

In a possible implementation of the third aspect, the first capability enquiry information includes a filter condition, and the filter condition indicates the terminal device to report capability information of the terminal device based on the filter condition.

In a possible implementation of the third aspect, the filter condition applied to the terminal device includes a frequency filter condition applied to the terminal device, where the frequency filter condition applied to the terminal device is used to filter a frequency band combination capability to be reported by the terminal device.

For example, the frequency filter condition applied to the terminal device is indicated by "appliedFreqBandListFilter" in capability information (for example, UECapabilityInformation).

In a possible implementation of the third aspect, the capability information includes second indication information, the second indication information indicates that the terminal device is a first-type terminal device, and the first-type terminal device is a terminal device that does not support the capability filtering. The processing module is further configured to determine, based on the second indication information, that the terminal device does not support the capability filtering.

In a possible implementation of the third aspect, the capability information includes a frequency filter condition field applied to the terminal device and third indication information, the frequency filter condition field applied to the terminal device indicates all supported bands of the terminal device, and the third indication information indicates that the frequency filter condition field applied to the terminal device indicates all the supported bands of the terminal device. The processing module is further configured to determine, based on the third indication information, that the capability information includes all the frequency band combination capabilities supported by the terminal device.

For example, the frequency filter condition applied to the terminal device is indicated by "appliedFreqBandListFilter" in capability information (for example, UECapabilityInformation).

In some possible implementations, the interface module is further configured to send the capability information to a second network device.

According to a fourth aspect, a communication apparatus is provided. The communication apparatus may be a terminal device, or may be a chip, a chip system, a processor, or the like in the terminal device. The apparatus includes a processing module and an interface module (the interface module may also be referred to as a communication module or the like). The interface module is configured to perform specific signal receiving and sending under driving of the processing module. The interface module is configured to receive first capability enquiry information from a first network device. The interface module is further configured to send capability information to the first network device in response to the first capability enquiry information, where the capability information includes all frequency band combination capabilities supported by the terminal device.

According to the communication apparatus provided in the fourth aspect, when a capability of the terminal device is reported to the first network device, capability filtering may not be performed, so that all the frequency band combination capabilities supported by the terminal device are reported to the network device. In this way, implementation complexity of the communication apparatus can be reduced, and costs of the terminal device can be reduced. The network device may either not perform a secondary capability enquiry on the terminal device, thereby reducing signaling overheads and communication resource overheads caused by repeated enquiry and reporting of the capability information of the terminal device.

In a possible implementation of the fourth aspect, in some possible implementations, before receiving the first capability enquiry information from the first network device, the interface module is further configured to send first indication information to the first network device, where the first indication information indicates that the terminal device does not support capability filtering.

In a possible implementation of the fourth aspect, the first indication information is carried in an RRC connection setup request message or an RRC connection setup complete message.

In a possible implementation of the fourth aspect, before receiving the first capability enquiry information from the first network device, the interface module is further configured to: receive second capability enquiry information from the first network device, where the second capability enquiry information includes a filter condition, and the filter condition indicates the terminal device to report capability information of the terminal device based on the filter condition; and send capability enquiry failure information to the first network device in response to the second capability enquiry information, where the capability enquiry failure information includes indication information indicating that the terminal device does not support capability filtering.

In a possible implementation of the fourth aspect, before receiving the first capability enquiry information from the first network device, the interface module is further configured to send fourth indication information to the first network device, where the fourth indication information indicates that the terminal device is a first-type terminal device, and the first-type terminal device is a terminal device that does not support capability filtering.

In a possible implementation of the fourth aspect, the interface module is further configured to: send a first random access preamble to the first network device, where the first random access preamble indicates that the terminal device is a first-type terminal device;
send a second random access preamble to the first network device on a first random access channel, where a resource location of the first random access channel indicates that the terminal device is a first-type terminal device;
send an RRC connection setup request to the first network device on a first logical channel, where the first logical channel indicates that the terminal device is a first-type terminal device; or
send an RRC connection setup request to the first network device, where the RRC connection setup request includes fourth indication information.

In a possible implementation of the fourth aspect, the first capability enquiry information does not include a filter condition, and the filter condition indicates the terminal device to report capability information of the terminal device based on the filter condition.

In a possible implementation of the fourth aspect, the filter condition includes a frequency filter condition, and the frequency filter condition indicates the terminal device to report, based on the frequency filter condition, a frequency band combination capability supported by the terminal device.

In a possible implementation of the fourth aspect, the capability information does not include a filter condition applied to the terminal device, and that the capability information does not include a filter condition applied to the terminal device indicates that the terminal device does not support capability filtering.

In a possible implementation of the fourth aspect, the first capability enquiry information includes a filter condition, and the filter condition indicates the terminal device to report capability information of the terminal device based on the filter condition.

In a possible implementation of the fourth aspect, the filter condition applied to the terminal device includes a frequency filter condition applied to the terminal device, where the frequency filter condition applied to the terminal device is used to filter a frequency band combination capability to be reported by the terminal device.

In a possible implementation of the fourth aspect, the capability information includes second indication information, the second indication information indicates that the terminal device is a first-type terminal device, and the first-type terminal device is a terminal device that does not support capability filtering.

In a possible implementation of the fourth aspect, the capability information includes a frequency filter condition field applied to the terminal device and third indication information, the frequency filter condition field applied to the terminal device indicates all supported bands of the terminal device, and the third indication information indicates that the frequency filter condition field applied to the terminal device indicates all the supported bands of the terminal device.

According to a fifth aspect, a communication apparatus is provided. The apparatus includes at least one processor and a storage, and the at least one processor is configured to perform the method according to any one of the first aspect or the possible implementations of the first aspect. The apparatus may be a terminal device, or may be a chip, a chip system, a processor, or the like in the terminal device.

According to a sixth aspect, a communication apparatus is provided. The apparatus includes at least one processor and a storage, and the at least one processor is configured to perform the method according to any one of the second aspect or the possible implementations of the second aspect. The apparatus may be a network device, may be a chip, a chip system, a processor, or the like in the network device, or may be a logical node, a logical module, software, or the like that can implement all or some functions of the network device.

According to a seventh aspect, a communication apparatus is provided. The apparatus includes at least one processor and an interface circuit. The at least one processor is configured to perform the method according to any one of the first aspect or the possible implementations of the first aspect. The apparatus may be a terminal device, or may be a chip, a chip system, a processor, or the like in the terminal device.

According to an eighth aspect, a communication apparatus is provided. The apparatus includes at least one processor and an interface circuit. The at least one processor is configured to perform the method according to any one of the second aspect or the possible implementations of the second aspect. The apparatus may be a network device, may be a chip, a chip system, a processor, or the like in the network device, or may be a logical node, a logical module, software, or the like that can implement all or some functions of the network device.

According to a ninth aspect, a network device is provided. The network device includes the communication apparatus provided in the third aspect, the network device includes the communication apparatus provided in the fifth aspect, or the network device includes the communication apparatus provided in the seventh aspect.

According to a tenth aspect, a terminal device is provided. The terminal device includes the communication apparatus provided in the fourth aspect, the terminal device includes the communication apparatus provided in the sixth aspect, or the terminal device includes the communication apparatus provided in the eighth aspect.

According to an eleventh aspect, a computer program product is provided. The computer program product includes a computer program. When being executed by a processor, the computer program is used to perform the method according to any one of the first aspect or the possible implementations of the first aspect, or the method according to any one of the second aspect or the possible implementations of the second aspect.

According to a twelfth aspect, a computer-readable storage medium is provided. The computer-readable storage medium stores a computer program. When being executed, the computer program is used to perform the method according to any one of the first aspect or the possible implementations of the first aspect, or the method according to any one of the second aspect or the possible implementations of the second aspect.

According to a thirteenth aspect, a communication system is provided. The communication system includes the foregoing terminal device and network device.

According to a fourteenth aspect, a chip is provided. The chip includes: a processor, configured to invoke a computer program from a storage and run the computer program, to cause a communication device on which the chip is installed to perform the method according to any one of the first aspect or the possible implementations of the first aspect, or the method according to any one of the second aspect or the possible implementations of the second aspect.

### BRIEF DESCRIPTION OF DRAWINGS

FIG. 1 is a diagram of an example of transmission of capability information of a terminal device among the terminal device, a network device, and a core network device;
FIG. 2 is a diagram of an example of a communication system applicable to a capability information transmission method according to an embodiment of this application;
FIG. 3 is a diagram of an example of an architecture in which a gNB-CU-CP and a gNB-CU-UP are split according to an embodiment of this application;
FIG. 4 is an interaction diagram of an example of a capability information transmission method according to an embodiment of this application;
FIG. 5 is an interaction diagram of another example of a capability information transmission method according to an embodiment of this application;
FIG. 6 is an interaction diagram of another example of a capability information transmission method according to an embodiment of this application;
FIG. 7 is an interaction diagram of still another example of a capability information transmission method according to an embodiment of this application;
FIG. 8 is an interaction diagram of still another example of a capability information transmission method according to an embodiment of this application;
FIG. 9 is a block diagram of an example of a communication apparatus according to an embodiment of this application;
FIG. 10 is a block diagram of another example of a communication apparatus according to an embodiment of this application;
FIG. 11 is a block diagram of an example of a communication apparatus according to an embodiment of this application;
FIG. 12 is a block diagram of another example of a communication apparatus according to an embodiment of this application; and
FIG. 13 is a block diagram of a terminal device according to an embodiment of this application.

### DESCRIPTION OF EMBODIMENTS

The following describes technical solutions of this application with reference to the accompanying drawings.

In descriptions of embodiments of this application, unless otherwise stated, "/" means "or". For example, A/B may represent A or B. The term "and/or" in this specification describes only an association relationship for describing associated objects and indicates that there may be three relationships. For example, A and/or B may represent the following three cases: Only A exists, both A and B exist, and only B exists. In addition, in the descriptions of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In embodiments of this application, a terminal device or a network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, embodiments of this application impose no special limitation on a specific structure of an execution body of a method provided in embodiments of this application, provided that a program that records code of the method provided in embodiments of this application can be run to perform communication according to the method provided in embodiments of this application. For example, the method provided in embodiments of this application may be performed by the terminal device or the network device, or may be performed by a functional module that is in the terminal device or the network device and that can invoke and execute a program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), or a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include and/or carry instructions and/or data.

In a wireless communication system, a network device (or may also be referred to as a radio access network device, an access network device, or the like) needs to obtain capability information of a terminal device. For example, the capability information of the terminal device may include capability information of the terminal device in one or more radio access technologies (radio access technologies, RATs), for example, include capability information of the terminal device in RATs such as a new radio (new radio, NR) technology and/or an evolved universal mobile telecommunications system terrestrial radio access (evolved UMTS terrestrial radio access, E-UTRA) technology. For example, in embodiments of this application, the radio access technology may include at least one of 4G, NR (5G), a future-oriented evolved access technology (for example, a 6G radio access technology), evolved universal mobile telecommunications system terrestrial radio access (evolved UMTS terrestrial radio access, E-UTRA), E-UTRA-NR, a universal mobile telecommunications system terrestrial radio access (UMTS terrestrial radio access, UTRA) technology, an enhanced data rates for GSM evolution radio access network (GSM EDGE radio access network, GER AN) technology, and code division multiple access (code division multiple access, CDMA) 2000-1XRTT, and certainly, may further include another radio access technology. This is not limited herein in embodiments of this application.

For example, the capability information of the terminal device may include one or more of a supported band (frequency band) of the terminal device in NR, a band combination (band combination, BC), a quantity of carriers that are supported by the terminal device in NR and that are used for carrier aggregation (carrier aggregation, CA), a carrier aggregation-bandwidth class (ca-bandwidthclass) supported by the terminal device in NR, a carrier bandwidth supported by the terminal device in NR, a quantity of multiple-input multiple-output (multi-input multi-output, MIMO) layers supported by the terminal device in NR, a modulation order, a modulation and coding scheme (modulation and coding scheme), and the like.

After obtaining the capability information of the terminal device, the network device may perform appropriate scheduling based on a capability of the terminal device, to ensure correct data processing. For example, the network device may configure one or more of parameters such as a packet data convergence protocol (Packet Data Convergence Protocol, PDCP) configuration, a radio link control (radio link control, RLC) configuration, a media access control (media access control, MAC) configuration, a physical layer configuration, a radio frequency configuration, or a measurement configuration of the terminal device based on the capability of the terminal device, to ensure that the configuration of the terminal device can meet the capability of the terminal device, that is, the terminal device can work normally under the configuration of the network device.

Different terminal devices have different capabilities, and the capability information of the terminal device relates to a large quantity of parameters (for example, including one or more of parameters such as a PDCP parameter, an RLC parameter, a MAC parameter, a physical layer parameter, a radio frequency parameter, or a measurement parameter). These capability parameters specifically correspond to specific capabilities of the terminal device.

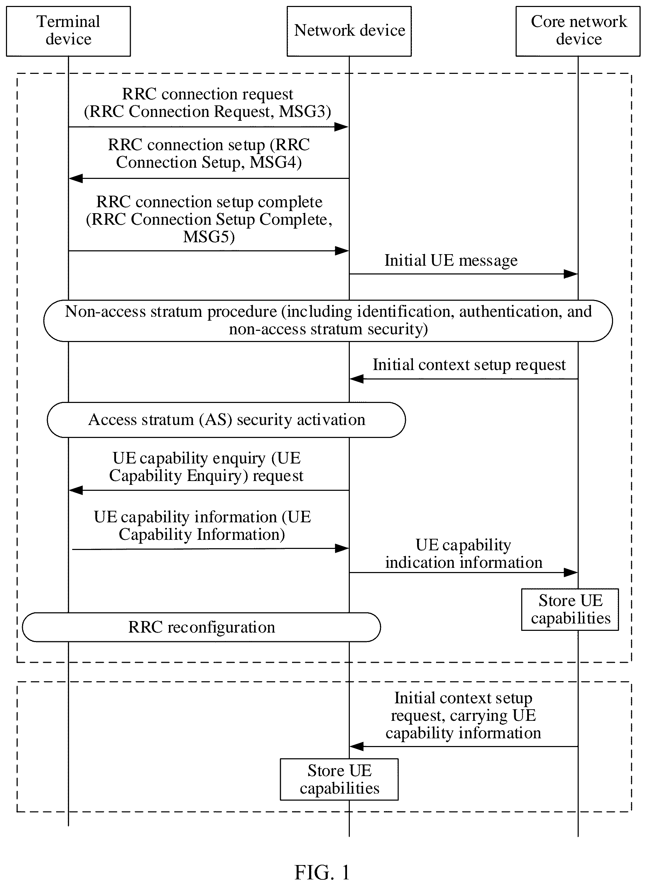

For example, FIG. 1 is a diagram of an example of transmission of capability information of a terminal device among the terminal device, a network device, and a core network device. As shown in FIG. 1, after the terminal device and the network device (for example, a base station) establish a radio resource control (radio resource control, RRC) connection, the network device enquires a capability of the terminal device from the terminal device. For example, the network device may send a UE capability enquiry (UE Capability Enquiry) request to the terminal device. After receiving the capability enquiry request from the network device, the terminal device reports the capability information of the terminal device to the network device. For example, the terminal device may send a capability of the terminal device to the network device in UE capability information (UE Capability Information). Then, the network device performs RRC reconfiguration based on the capability reported by the terminal device, and performs scheduling and communication by using an appropriate algorithm. After the network device receives the capability information of the terminal device, the network device forwards the capability information of the terminal device to the core network device (for example, sends the capability information of the terminal device to the core network device in UE capability indication information shown in FIG. 1), and the core network device stores the capability information of the terminal device.

When the terminal device is handed over between network devices, for example, handed over from a source network device to a target network device, a target network may obtain the capability information of the terminal device from a terminal device context of the source network device. When the terminal device enters an RRC idle (RRC idle) state, the network device deletes the stored capability information of the terminal device. When the terminal device returns to an RRC connected state again, the network device may obtain the capability information of the terminal device from the core network device (for example, the core network device sends the capability information of the terminal device to the network device in an initial context setup request shown in FIG. 1). If the network device cannot obtain the capability information of the terminal device from the core network device, the network device triggers a procedure of enquiring the capability of the terminal device, so that the terminal device reports the capability of the terminal device again.

In capabilities of the terminal device in NR, based on different levels to which the capabilities of the terminal device belong, the capabilities of the terminal device in NR include the following three different levels of capabilities:
a terminal device-level capability (which may also be referred to as a per UE capability);
a band (band)-level capability (which may also be referred to as a per band capability), where the per band capability is a capability related to a specific band; and
a band combination (band combination, BC)-level capability (which may also be referred to as a per BC capability), where the per BC capability is a capability related to a band combination, and includes a capability used by the terminal device for carrier aggregation.

The band combination-level capability may further include a per band per BC capability (a capability for a specific band in a specific BC) and a carrier-level capability (which may also be referred to as a per CC capability). The per CC capability is a capability of a specific carrier (carrier) in a specific band (band) in a specific BC.

For example, capability information of the terminal device in NR may include a BC list supported by the terminal device, indicating a BC-level capability of the terminal device.

For the BC list supported by the terminal device, an item in the list is a band combination supported by the terminal device, and a band combination indicates specific bands (bands) included in the band combination. For example, a band combination may include a band 1, a band 2, and a band 3. Even if the terminal device supports only one band (band), the terminal device reports the band to the network device via the BC list. Certainly, the terminal device also reports a specific quantity of component carriers (component carriers, CCs) supported in the band combination and a capability of each CC. Even if the terminal device supports only one CC in one band, reporting is performed via the BC list.

With an increase of NR bands, evolution of a carrier aggregation technology, and improvement of a terminal capability, a quantity of band combinations supported by the terminal device is increasing. Consequently, a size of the capability information of the terminal device (namely, a quantity of resources occupied by the capability information of the terminal device) is increasing, and even exceeds a maximum capacity 9 K bytes of a packet data convergence protocol packet data unit (packet data convergence protocol packet data unit, PDCP PDU) (PDCP PDU size 9 Kbytes). Therefore, a characteristic of segmented capability reporting of the terminal device is introduced in NR R16. However, when the network device or the terminal device does not support capability segmentation, the terminal device can only partially tailor the reported capability information and then report tailored capability information, to ensure that the reported capability information does not exceed the maximum capacity 9 K bytes of the PDCP PDU. Consequently, the terminal device cannot completely report the capability to the network device. For example, if some band combinations are supported by the terminal device but cannot be reported, the network device does not know that the terminal device supports the band combinations, and the network device cannot configure the corresponding band combinations. Consequently, system performance deteriorates.

Given that a band supported by a network device is limited during network deployment, to reduce a length of a capability information bitstream, it is required in the conventional technology that an enquiry with band filtering be used when the network device enquires a capability of a terminal device. A terminal device capability enquiry request (a UE capability enquiry) delivered by the network device may include filter information (or may also be referred to as a filter condition). For example, the filter information may be indicated by using a "frequency band list filter (frequencyBandListFilter)" field (optionally, the field may also be referred to as a filter condition field) in the capability enquiry request, and is for requesting obtaining of a band of interest to the network device through filtering. The terminal device reports, in the capability information of the terminal device, only band combinations including bands enquired by the network device in the filter condition, and sorts and reports the band combinations based on a band sequence in the filter condition used by the network device for enquiry. To be specific, the terminal device first reports a band combination including a band ranked first in the bands enquired by the network device, and then reports a band combination including a band ranked behind. The terminal device does not report a band combination including a band that is not enquired by the network device in the filter condition, even if the terminal device supports the band combination including the band. In other words, the terminal device only needs to send, to the network device, the capability information indicated by the filter information, and the terminal device does not need to send, to the network device, capability information that is not indicated by the filter information. That is, the terminal device needs to filter out the capability information that is not indicated by the filter information. Alternatively, it may be understood as that the filter information indicates capability information requested by the network device. In a manner of sending the filter information, some capability information that is not needed by the network device may be filtered out, to reduce a size of a capability message of the terminal device, thereby reducing signaling overheads.

Optionally, the filter information may further include another filter condition for the band, for example, a maximum downlink/uplink bandwidth (maxBandwidthRequestedDL/UL) and a maximum quantity of downlink/uplink carriers (maxCarriersRequestedDL/UL). In addition, the NR protocol requires that an enquiry with band filtering needs to be used when the network device enquires the capability of the terminal device.

For example, if the filter information indicates (or includes) the maximum downlink bandwidth of NR, the terminal device sends, to the network device, a band combination including a band whose downlink bandwidth does not exceed the maximum downlink bandwidth indicated by the filter information. This is equivalent to that the terminal device filters out, based on the filter information, a band combination including a band whose downlink bandwidth exceeds the maximum downlink bandwidth indicated in the filter information.

If a capability enquiry with a band filter (frequencyBandListFilter) condition is used by the network device, the terminal device needs to backfill, in the reported capability information of the terminal device, a frequency band list filter condition (namely, band filter information) used by the network device for enquiry. For example, the terminal device may fill, in an applied frequency band list filter (appliedFreqBandListFilter) field in the capability information of the terminal device (the UE capability information), the frequency band list filter condition used by the network device for enquiry. That is, the terminal device places the same band filter information in the capability information of the terminal device in a mirroring mode, and reports the same band filter information to the network device again. An objective is as follows: When the terminal device is handed over between network devices (for example, handed over from a source network device to a target network device), the source network device places the capability information of the terminal device in a context of the terminal device and forwards the capability information of the terminal device to the target network device, and the target network device may learn of, based on the "appliedFreqBandListFilter" field backfilled in the capability information of the terminal device, a filter condition used by the source network device to enquire the capability of the terminal device last time. When a band of interest to the target network device is different from a band of interest to the source network device enquiring the capability of the terminal device, for example, there is an additional band of interest to the target network device, the target network device may trigger the capability enquiry of the terminal device again and use a new filter condition. If the capability information of the terminal device does not include the band filter information, when the capability information of the terminal device does not include a BC including a band, the target network device cannot determine whether the terminal device does not support the band or the source network device does not enquiry the band when the source network device enquires the capability. Consequently, the target network device and the terminal device have inconsistent understandings of the band, and performance of configuring and scheduling the terminal device by the network device is reduced.

An important goal of 5G is to enable the connected industry. 5G connectivity can be a catalyst for a next wave of industrial transformation and digitalization, which improves flexibility, improves productivity and efficiency, reduces maintenance costs, and improves operational security. Therefore, 5G is oriented to large-scale industrial wireless sensors (such as pressure sensors and humidity sensors), surveillance cameras, wearable devices (such as smart watches and electronic health-related devices), and medical monitoring devices for public safety applications that are all required to have features of low device complexity, a small size, and a long battery life. In the 3GPP standard, such a device may be referred to as a reduced capability terminal device (reduced capability UE, REDCAP UE), and has a low capability, for example, supports a lower maximum bandwidth, fewer receive branches Rx branches, lower-order MIMO, and a lower modulation order. The REDCAP UE does not support carrier aggregation or dual connectivity (dual connectivity, DC).

In the conventional technology, when a capability enquiry with the filter condition is used by the network device, the terminal device needs to report a capability obtained through filtering, and backfill the same filter condition in the capability information of the terminal device. Because the REDCAP UE does not support a carrier aggregation operation, the REDCAP UE reports much fewer band combinations than non-REDCAP UE. Therefore, a gain of performing band capability filtering by the REDCAP UE is not significant. That is, a size of complete capability information reported by the REDCAP UE to the network device usually does not exceed 9 Kbytes. In addition, performing capability filtering by the terminal device further increases unnecessary implementation complexity and a processing delay.

Therefore, to meet low complexity and low costs of the REDCAP UE, how the network device enquires a capability of the REDCAP UE and how the REDCAP UE reports a capability of the REDCAP UE are problems that need to be resolved currently.

In view of this, this application provides a capability information transmission method. A terminal device explicitly or implicitly indicates, to a network device, that the terminal device supports or does not support a capability filtering enquiry (or the terminal device performs or does not perform capability filtering), to help the network device determine that the terminal device does not support capability filtering. This ensures that the terminal device and the network device have a consistent understanding of whether the terminal device supports the capability filtering, and ensures interoperability and compatibility between the terminal device and the network device. When the terminal device does not support band capability filtering, the terminal device does not perform capability filtering, to implement low complexity, low costs, and low energy consumption of the terminal device. A capability enquiry without a filter condition may be used by the network device, so that a size of capability enquiry information can be reduced, consumption of communication resources can be reduced, and air interface resource overheads can be reduced. In addition, the network device may determine that the terminal device reports a full capability, so that the network device may either not perform a secondary capability enquiry on the terminal device, thereby reducing communication resource overheads.

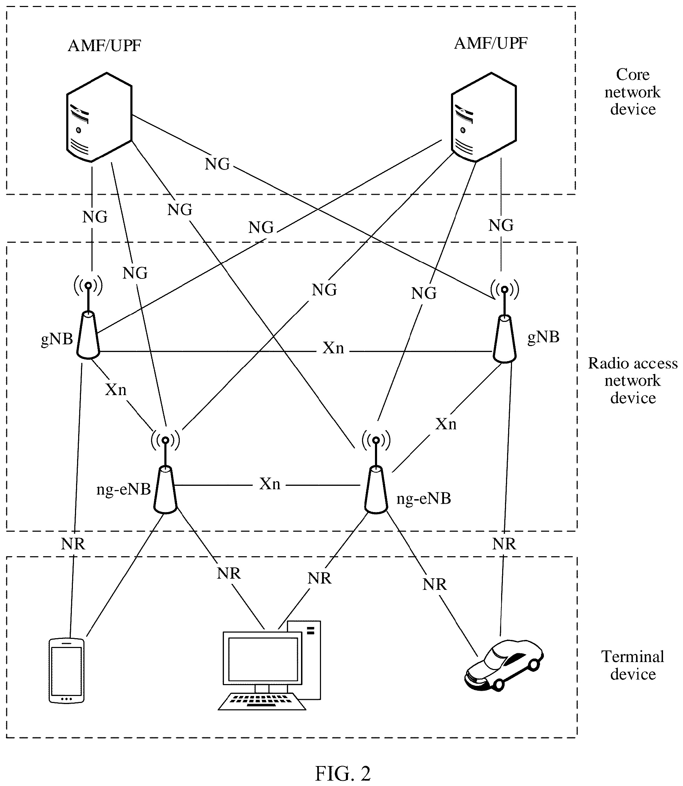

For ease of understanding embodiments of this application, a communication system applicable to an embodiment of this application is first briefly described with reference to FIG. 2.

FIG. 2 is a diagram of an example of a communication system applicable to a capability information transmission method according to an embodiment of this application. As shown in FIG. 2, the communication system includes a radio access network (radio access network, RAN) device, a core network (core network, CN) device, and a terminal device.

The terminal device may be connected, through a radio air interface, to a radio access network device (for example, a gNB or a ng-eNB shown in FIG. 2) deployed by an operator. The radio access network device is connected to the core network device in the wireless manner or a wired manner. The core network device and the radio access network device may be different physical devices, or may be a same physical device that integrates a core network logical function and a radio access network logical function.

The radio access network device is mainly configured to implement functions such as a radio physical layer function, resource scheduling and radio resource management, radio access control, and mobility management. For example, as shown in FIG. 2, the core network device may include functional units such as an access and mobility management function (access & mobility function, AMF) and a user plane function (user plane function, UPF). These functional units may work independently, or may be combined to implement some control functions. For example, the AMF is configured to complete access control and mobility management functions such as access authentication, security encryption, and location registration of the terminal device, session management functions such as establishment, release, and change of a user plane transmission path, and functions of analyzing data (such as congestion) related to some slices (slices) and data related to the terminal device. The UPF mainly completes functions such as routing and forwarding of user plane data, for example, is responsible for data packet filtering, data transmission/forwarding, rate control, charging information generation, and the like for the terminal device.

As shown in FIG. 2, communication devices may communicate with each other by establishing a connection through an interface. For example, data and signaling may be transmitted between different RAN devices through an Xn interface. A connection may be established between the RAN device and the core network device through a next generation (next generation, NG) interface, to implement communication. The terminal device may establish an air interface connection to the RAN device through an NR interface, to perform transmission of user plane data and control plane signaling. Certainly, the terminal device may alternatively establish a control plane signaling connection to the AMF through an NG interface. An interface for communication between the communication devices is not limited in this embodiment of this application. It should be noted that FIG. 2 is merely an example architectural diagram. In addition to the communication devices shown in FIG. 2, the communication system may further include another functional unit or functional entity. For example, the core network device may further include another functional unit such as a unified data management (unified data management, UDM) function. This is not limited in embodiments of this application.

In this embodiment of this application, the communication system shown in FIG. 2 may be a cellular system related to the 3rd generation partnership project (3rd generation partnership project, 3GPP), for example, a 4G or 5G mobile communication system (including standalone networking and non-standalone networking), or a future-oriented evolved system (for example, a 6G mobile communication system), may be an open access network (open RAN, O-RAN or ORAN), a cloud radio access network (cloud radio access network, CRAN), or a wireless fidelity (wireless fidelity, Wi-Fi) system, or may be a communication system integrating two or more of the foregoing systems. This is not limited herein in embodiments of this application.

The radio access network device may also be sometimes referred to as an access network device, a network device, a RAN node, a RAN entity, an access node, or the like, and forms a part of the communication system, to help the terminal implement radio access. In the communication system shown in FIG. 2, a plurality of radio access network devices may be nodes of a same type, or may be nodes of different types.

In a possible scenario, the radio access network device may be a base station (base station), an evolved NodeB (evolved NodeB, eNodeB), an access point (access point, AP), a transmission reception point (transmission reception point, TRP), a next generation NodeB (next generation NodeB, gNB), a next-generation base station in the 6th generation (6th generation, 6G) mobile communication system, a base station in a future mobile communication system, an access node in the Wi-Fi system, or the like. The RAN node may be a macro base station, a micro base station, an indoor base station, a relay node, a donor node, or a radio controller in a CRAN scenario. Optionally, the RAN node may be a server, a wearable device, a vehicle, a vehicle-mounted device, or the like. For example, an access network device in a vehicle-to-everything (vehicle-to-everything, V2X) technology may be a road side unit (road side unit, RSU). All or some of functions of the radio access network device in this application may alternatively be implemented by using a software function running on hardware, or may be implemented by using a virtualization function instantiated on a platform (for example, a cloud platform). Alternatively, the radio access network device in this application may be a logical node, a logical module, or software that can implement all or some of functions of the radio access network device.

In an NR technology, the radio access network device (for example, the gNB) may include one gNB central unit (Central Unit, CU) and one or more gNB distributed units (Distributed Units, DUs). The gNB-CU and the gNB-DU are different logical nodes, and may be deployed on different physical devices or deployed on a same physical device.

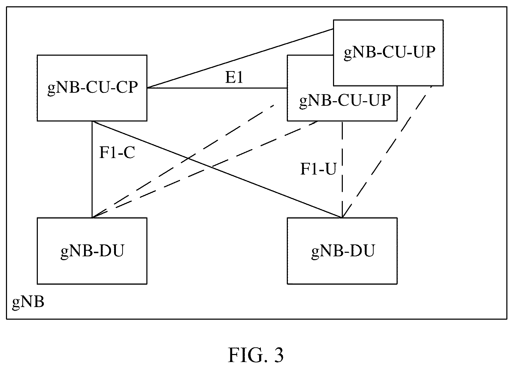

If an architecture in which a control plane and a user plane are split is considered, the gNB-CU may be further divided into a central unit-control plane (Central Unit-Control Plane, CU-CP) entity (or may be referred to as a CU-CP node) and a central unit-user plane (Central Unit-User Plane, CU-UP) entity (or may be referred to as a CU-UP node). The gNB-CU-CP is a control plane entity, and is configured to provide signaling control. The gNB-CU-UP is a user plane entity, and is configured to provide transmission of data of the terminal device. The gNB-CU-CP is connected to the gNB-CU-UP through an E1 interface, the gNB-CU-CP is connected to the gNB-DU through an F1-C interface, and the gNB-CU-UP is connected to the gNB-DU through an F1-U interface. A structure thereof is shown in FIG. 3. FIG. 3 is a diagram of an architecture in which a gNB-CU-CP and a gNB-CU-UP are split.

In an example shown in FIG. 3, the gNB-CU-CP may include an RRC function and a PDCP control plane function (for example, used to process data on a signaling radio bearer). The gNB-CU-UP mainly includes an SDAP function and a PDCP user plane function.

The architecture shown in FIG. 3 further has the following characteristics:
one gNB includes one gNB-CU-CP, a plurality of gNB-CU-UPs, and a plurality of gNB-DUs;
one DU can be connected to only one gNB-CU-CP;
one CU-UP can be connected to only one gNB-CU-CP;
one DU can be connected to a plurality of gNB-CU-UPs under control of a same CU-CP; and
one CU-UP can be connected to a plurality of gNB-DUs under control of a same CU-CP.

It should be understood that FIG. 3 is merely an example, and should not constitute any limitation on an architecture of the gNB. For example, in an architecture in which a CU and a DU are split and a CP and a UP are split, the gNB may include only one gNB-CU-UP, one gNB-CU-CP, and one gNB-DU, or may include more gNB-CU-UPs and gNB-DUs. This is not limited in this application.

In a possible scenario, for example, a RAN node may be the foregoing CU, DU, CU-CP, or CU-UP. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

The terminal device may also be referred to as a terminal, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

It should be understood that, in embodiments of this application, the "radio access network device" may alternatively have different expressions. For example, the "radio access network device" may also be referred to as a network device, a RAN node, an access network device, or the like. Unless otherwise specified, the "network device" is used for expression in this application. The network device is an original expression of an access network device (for example, a base station).

It should be further understood that the communication system shown in FIG. 2 is merely an example, and should not constitute any limitation on the communication system applicable to this embodiment of this application. For example, the communication system shown in FIG. 2 may further include more or fewer network nodes, for example, a terminal device or a radio access network device. The radio access network device or the terminal device included in the communication system shown in FIG. 2 may be the radio access network device or the terminal device in the foregoing various forms. Details are not shown one by one in the figure in this embodiment of this application.

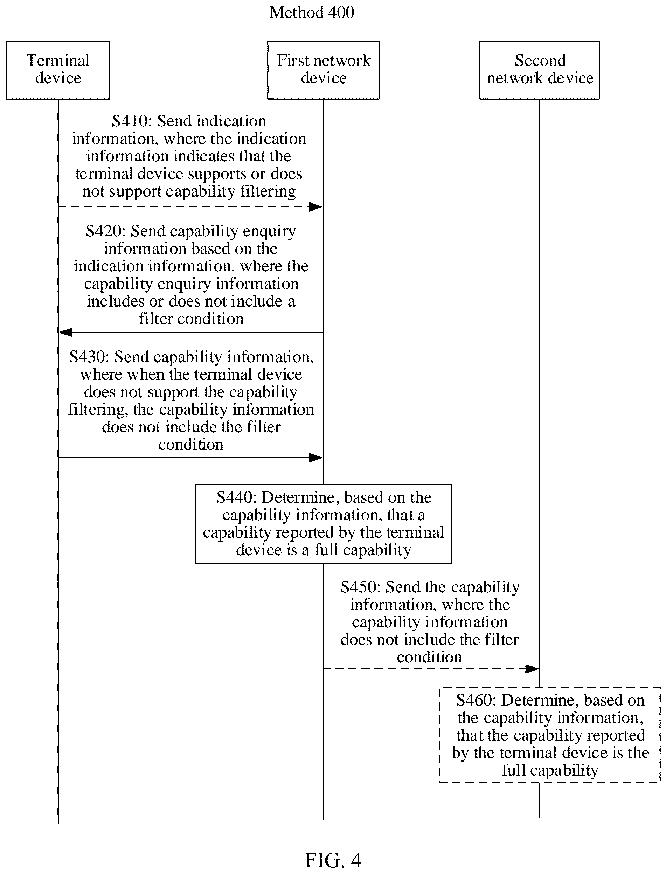

The following describes, in detail with reference to FIG. 4, the method provided in this application. FIG. 4 is an interaction diagram of a capability information transmission method according to an embodiment of this application. The method 400 may be applied to the scenario shown in FIG. 2, or certainly may alternatively be applied to another communication scenario. This is not limited in embodiments of this application.

It should be understood that, in this embodiment of this application, the method is described by using an example in which the method is performed by a terminal device and a network device. By way of example, and not limitation, the terminal device in this application may alternatively be a chip, a chip system, or a processor that supports the terminal device in implementing the method. The network device in this application may alternatively be a chip, a chip system, or a processor that supports the network device in implementing the method, or may be a logical node, a logical module, or software that can implement all or some functions of the network device.

It should be further understood that, in this application, "sending information to ... (the terminal device)" may be understood as that a destination end of the information is a terminal, and may include directly or indirectly sending the information to the terminal device. "Receiving information from ... (the terminal device) or receiving information from the terminal device" may be understood as that a source end of the information is the terminal device, and may include directly or indirectly receiving the information from the terminal device. Information may be necessarily processed between the source end and the destination end in information sending, for example, a format is changed. However, the destination end may understand valid information from the source end. Similar descriptions in this application may be understood similarly, and details are not described herein again.

As shown in FIG. 4, the method 400 shown in FIG. 4 may include S410 to S460. The following describes steps in the method 400 in detail with reference to FIG. 4.

S410: The terminal device sends indication information to a first network device, where the indication information indicates that the terminal device supports or does not support capability filtering.

Correspondingly, the first network device receives the indication information.

It should be understood that S410 is an optional step.

For example, in a registration procedure, after establishing an RRC connection to the first network device, the terminal device may send the indication information to the first network device before receiving UE capability enquiry message delivered by the first network device. The indication information indicates that the terminal device supports or does not support the capability filtering. For example, the registration procedure may include initial registration, mobility registration, periodic registration, or other registration. This is not limited in embodiments of this application.

In a possible implementation, the indication information may be 1 bit (bit), where a value "1" of the bit indicates that the terminal device does not support the capability filtering, and a value "0" indicates that the terminal device supports the capability filtering; or a value "0" of the bit indicates that the terminal device does not support the capability filtering, and a value "1" indicates that the terminal device supports the capability filtering.

In another possible implementation, that the indication information exists or does not exist (that is, the terminal device sends or does not send the indication information) may alternatively indicate that the terminal device supports or does not support the capability filtering. For example, if the terminal device sends (reports) the indication information, it indicates that the terminal device does not support the capability filtering. If the terminal device does not send the indication information, it indicates that the terminal device supports the capability filtering.

Optionally, only a reduced capability terminal device (REDCAP UE) is allowed to report (send) the indication information, and a non-reduced capability terminal device is not allowed to report the indication information. In a possible implementation, this may be a rule predefined in a protocol. For example, the REDCAP UE is allowed to send the indication information, indicating that the capability filtering is not supported. REDCAP UE that does not support the capability filtering may send the indication information, indicating that the capability filtering is not supported. REDCAP UE that supports the capability filtering does not send the indication information, indicating that the capability filtering is supported. The non-reduced capability terminal device does not send the indication information, indicating that capability filtering is supported.

In embodiments of this application, that the terminal device supports or does not support the capability filtering may be understood as that the terminal device supports or does not support reporting of a capability of the terminal device based on a filter condition (for example, a band filter condition) delivered by the first network device; the terminal device supports or does not support a UE capability enquiry with a filter condition (for example, a band filter condition) in being used by the first network device; or the terminal device supports or does not support performing a procedure of filtering reported capability information. For example, the capability filtering may include band filtering and/or band combination capability filtering.

It should be understood that, in embodiments of this application, "the terminal device does not support the capability filtering (for example, the band filtering)" may also be understood as that the capability reported by the terminal device is a full capability or an unfiltered capability, or the terminal device does not perform a capability filtering procedure. In other words, "the terminal device does not support the capability filtering (for example, the band filtering)" may be equivalent to "the capability reported by the terminal device is a full capability or an unfiltered capability", or "the terminal device does not perform a capability filtering procedure". "The capability reported by the terminal device is a full capability or an unfiltered capability" may be understood as that when the first network device requests the terminal device to report the capability information, the terminal device reports the full capability or the unfiltered capability of the terminal device in the capability information.

In other words, if the indication information indicates that the terminal device does not support the capability filtering, the first network device may determine that the terminal device reports the full capability or the unfiltered capability of the terminal device in the capability information.

For example, the full capability of the terminal device may include all bands and band combinations that can be supported by hardware of the terminal device, or all frequency band combination capabilities supported by the terminal device.

For example, a "frequency band list filter (frequencyBandListFilter)" field in a capability enquiry request (a UE capability enquiry) delivered by the first network device may indicate a filter condition.

For example, the filter condition may include one or more of the following:
an NR frequency band number (NR frequency band number), an NR maximum downlink/uplink bandwidth (maxBandwidthRequestedDL/UL), an NR maximum downlink/uplink carrier quantity (maxCarriersRequestedDL/UL), and the like.

Optionally, in a possible implementation, the indication information may be carried in a random access message 5 (MSG5), for example, carried in an "RRC Connection Setup Complete" message, or carried in a random access message 3 (MSG3), for example, carried in an "RRC Connection Request" message.

It should be understood that, in another implementation of this application, the indication information may alternatively be carried in another message or signaling sent by the terminal device to the first network device, or the indication information may be separately sent to the first network device as a message or signaling, provided that the indication information is sent to the first network device before the first network device sends the capability enquiry message (the UE capability enquiry) to the terminal device. This is not limited in embodiments of this application.

S420: The first network device sends the capability enquiry information to the terminal device based on the indication information, where the capability enquiry information includes or does not include the filter condition.

Correspondingly, the terminal device receives the capability enquiry information.

Optionally, in embodiments of this application, the "capability enquiry" may also be referred to as a "terminal device capability enquiry". Unless otherwise specified in the following, descriptions of the "capability enquiry" and the "terminal device capability enquiry" may be interchanged with each other.

In a possible implementation, after the first network device receives the indication information, if the indication information indicates that the terminal device does not support the capability filtering, the capability enquiry with the filter condition is not used by the first network device.

In another possible implementation, after the first network device receives the indication information, if the indication information indicates that the terminal device supports the capability filtering, the capability enquiry with the filter condition may be used by the first network device. It may be understood that whether to use the capability enquiry with the filter condition is determined by the first network device. If the indication information indicates that the terminal device supports the capability filtering, the capability enquiry with the filter condition may alternatively not be used by the first network device.

In embodiments of this application, "the capability enquiry with the filter condition is not used by the first network device" may be understood as that when enquiring the capability of the terminal device, the first network device does not filter or screen the capability of the terminal device. In this case, the capability enquiry information (for example, the UE capability enquiry) sent by the first network device to the terminal device does not carry (does not include) the filter condition. The filter condition indicates the terminal device to report the capability information of the terminal device based on the filter condition. For example, the filter condition includes a frequency filter condition (or may also be referred to as a filter condition of a band capability). The frequency filter condition indicates the terminal device to report, based on the frequency filter condition, a frequency band combination capability supported by the terminal device. The capability enquiry information may not include a frequency band list filter (frequencyBandListFilter) field, and the field indicates the frequency filter condition.

"The capability enquiry with the filter condition is used by the first network device" may be understood as that when enquiring the capability of the terminal device, the first network device needs to filter or screen the capability of the terminal device. In other words, the terminal device needs to send, to the first network device, capability information indicated by the filter condition, and the terminal device does not need to send, to the first network device, capability information that is not indicated by the filter condition. In this case, the capability enquiry information sent by the first network device to the terminal device carries (includes) a filter condition. For example, the filter condition may be a filter condition used to filter a band capability, the capability enquiry information may include a frequency band list filter (frequencyBandListFilter) field, and the field indicates the filter condition of the band capability.

When the method 400 does not include S410, S420 may be replaced with the following step: A first network device sends capability enquiry information to a terminal device, where the capability enquiry information includes a filter condition, that is, a capability enquiry with the filter condition is used by the first network device.

In the foregoing manner, before the network device performs capability enquiry, the terminal device indicates, to the network device, whether the terminal device supports the capability filtering, so that the network device can determine whether the terminal device supports the capability filtering. This ensures that the terminal device and the network device have a consistent understanding of whether the terminal device supports the capability filtering, and ensures interoperability and compatibility between the terminal device and the network device. In addition, when the terminal device does not support the capability filtering, the capability enquiry with the filter condition may not be unnecessarily used by the network device, so that a size of the capability enquiry information can be reduced (because the capability enquiry information does not include the filter condition), and consumption of communication resources can be reduced.

S430: After receiving the capability enquiry information, the terminal device sends the capability information to the first network device, where when the terminal device does not support the capability filtering, the capability information does not include the filter condition.

Correspondingly, the first network device receives the capability information.

Optionally, in embodiments of this application, the "capability information" may also be referred to as "capability information of the terminal device". Unless otherwise specified in the following, descriptions of the "capability information" and the "capability information of the terminal device" may be interchanged with each other.

S440: The first network device determines, based on the capability information, that the capability reported by the terminal device is the full capability.

The following specifically describes step S430 and step S440.

When the method 400 includes S410:
in a possible implementation, when the terminal device does not support the capability filtering, the capability enquiry information sent by the first network device does not include the filter condition. For example, the capability enquiry information (for example, the UE capability enquiry) does not include a capability filter condition field (for example, a FrequencyBandListFilter field). When reporting the capability of the terminal device to the first network device, the terminal device may not perform (not execute) the capability filtering. In this way, implementation complexity of the terminal device can be reduced, and costs of the terminal device can be reduced. In other words, the terminal device may report the full capability (or may also be referred to as an unfiltered capability) of the terminal device to the first network device in the capability information (for example, UECapabilityInformation). For example, the full capability of the terminal device may include all the bands and band combinations that can be supported by the hardware of the terminal device.

When the terminal device does not support the capability filtering, the capability enquiry information sent by the first network device does not include the filter condition. In this case, in S430, the capability information sent by the terminal device to the first network device may alternatively not include the applied filter condition. For example, the capability information (for example, the UE capability information) does not include a field (field) indicating to apply the filter condition to the terminal device. For example, the applied filter condition field may be an applied frequency band list filter (appliedFreqBandListFilter) field, and the field originally indicates the band filter condition sent by the first network device. Because the first network device has learned that the terminal device does not support the capability filtering in S410, the first network device may determine that the capability reported by the terminal device is the full capability of the terminal device.

For example, the full capability of the terminal device may include all the frequency band combination capabilities supported by the terminal device (where a frequency band combination may also be referred to as a band combination (band combination, BC)).

However, in the conventional technology, if the capability information sent by the terminal device to the first network device includes the applied filter condition, and a band included in the applied filter condition is a band in the filter condition in the enquiry message of the first network device, the terminal device supports the capability filtering.

Optionally, in embodiments of this application, that "the capability information" reported by the terminal device "does not include the applied filter condition" may also be used as implicit indication information, to indicate, to the first network device, that the terminal device does not support the capability filtering, the capability reported by the terminal device is the full capability or the unfiltered capability, or the terminal device does not perform the capability filtering procedure.

When the method 400 does not include S410:
when the method 400 does not include S410, the capability enquiry information sent by the first network device to the terminal device may include the filter condition. For example, the capability enquiry information (for example, the UE capability enquiry) includes a capability filter condition field (for example, a FrequencyBandListFilter field). When the terminal device does not support the capability filtering, the terminal device may not perform capability filtering when reporting the capability of the terminal device to the first network device. The terminal device may not perform capability filtering when reporting the capability of the terminal device to the first network device. In this way, implementation complexity of the terminal device can be reduced, and costs of the terminal device can be reduced. In other words, the terminal device may report the full capability (or may also be referred to as an unfiltered capability) of the terminal device to the first network device in the capability information (for example, the UE capability information).

When the terminal device does not support the capability filtering, the capability enquiry information sent by the first network device may include the filter condition. In this case, in S430, the capability information sent by the terminal device to the first network device may alternatively not include the filter condition. For example, the capability information (for example, the UE capability information) may not include a field indicating the filter condition. For example, the field may be an applied frequency band list filter (appliedFreqBandListFilter) field. That is, the capability information does not include the applied frequency band list filter (appliedFreqBandListFilter) field, and the field originally indicates, in a mirroring mode, the filter condition used by the first network device to enquire the capability. In this case, because the capability information reported by the terminal device does not include the filter condition, "the capability information does not include the applied filter condition" may be used as implicit indication information, to indicate, to the first network device, that the terminal device does not support the capability filtering (for example, the band filtering), the capability reported by the terminal device is the full capability or the unfiltered capability, or the terminal device does not perform the capability filtering procedure.

Because the capability information reported by the terminal device does not include the filter condition, in S440, after the first network device receives the capability information, because the capability information does not include the filter condition, the first network device may determine that the terminal device does not support the capability filtering, that is, may determine that the capability reported by the terminal device is the full capability or the unfiltered capability of the terminal device.

For example, when the capability enquiry information sent by the first network device includes the filter condition, if the terminal device does not support the capability filtering, the terminal device does not backfill "apppliedFreqBandListFilter" in the reported capability information, in other words, the capability information reported by the terminal device does not include the "appliedFreqBandListFilter" field. That the capability information reported by the terminal device does not include the "appliedFreqBandListFilter" field may indicate that the terminal device does not support band capability filtering, the capability reported by the terminal device is the full capability or the unfiltered capability, or the terminal device does not perform the capability filtering procedure.

It can be learned that even if the method 400 does not include S410, the first network device may determine, based on "the capability information reported by the terminal device does not include the applied filter condition", that the terminal device does not support the band capability filtering, in other words, the capability reported by the terminal device is the full capability or the unfiltered capability.

Optionally, in another possible implementation, when the method 400 does not include S410, the capability enquiry information sent by the first network device may include the filter condition. In S430, if the terminal device does not support the capability filtering, the capability information sent by the terminal device to the first network device may further include the indication information, and the indication information indicates that the terminal device does not support the capability filtering. In this case, the first network device may determine, based on "the indication information in the capability information reported by the terminal device" that the terminal device does not support the band capability filtering, in other words, the capability reported by the terminal device is the full capability. In this case, the capability information may include or not include the filter condition. When the capability information does not include the filter condition, further, "the capability information does not include the applied filter condition" may also be used as implicit indication information, to indicate, to the first network device, that the terminal device does not support the capability filtering (for example, the band filtering).

Certainly, when the method 400 includes S410, in S430, the capability information sent by the terminal device to the first network device may also include the foregoing indication information.

When determining that the terminal device does not support the band capability filtering, after receiving the capability information reported by the terminal device, the first network device may determine that the terminal device does not perform capability filtering, and the capability reported by the terminal device is the full capability, so that the first network device does not perform a secondary capability enquiry on the terminal device (for example, change the filter condition used by the first network device), thereby reducing signaling overheads and communication resource overheads caused by repeated reporting of the capability information by the terminal device.

Certainly, if the terminal device supports the capability filtering, the capability enquiry information (for example, the UE capability enquiry) sent by the first network device may include the filter condition (for example, include the "frequencyBandListFilter" field). If the terminal device needs to perform capability filtering based on the filter condition, the capability information (for example, UECapabilityInformation) sent by the terminal device to the first network device includes the filter condition (for example, includes the "appliedFreqBandListFilter" field), and the capability included in the capability information is a capability obtained by performing filtering by the terminal device based on the filter condition, and may not be the full capability of the terminal device.

S450: The first network device sends the capability information to a second network device, where the capability information does not include the filter condition.

Correspondingly, the second network device receives the capability information.

S460: The second network device determines, based on the capability information, that the capability reported by the terminal device is the full capability.

The following specifically describes step S450 and step S460.

In some possible implementations, when the terminal device is handed over from a cell of the first network device to a cell of the second network device, the second network device may obtain context (UE context) information of the terminal device from the first network device, where the context information includes the capability information of the terminal device. That is, the first network device may send the capability information to the second network device, where the capability information does not include the filter condition.

After the second network device receives the capability information, in a possible implementation, because the capability information does not include the applied filter condition, for example, does not include the "appliedFreqBandListFilter" field, the second network device may determine that the terminal device does not support the capability filtering (for example, the band filtering), the capability reported by the terminal device is the full capability or the unfiltered capability, or the terminal device does not perform the capability filtering procedure. For example, the second network device determines, based on "the capability information does not include the "appliedFreqBandListFilter" field", that the capability included in the capability information is the full capability or the unfiltered capability of the terminal device.

After the second network device receives the capability information, in another possible implementation, the capability information includes the indication information, indicating that the terminal device does not support the capability filtering. In this case, the second network device may determine, based on the indication information, that the terminal device does not support the capability filtering (for example, the band filtering), the capability reported by the terminal device is the full capability or the unfiltered capability, or the terminal device does not perform the capability filtering procedure. For example, the second network device determines, based on the indication information, that the capability included in the capability information is the full capability or the unfiltered capability of the terminal device.

When the second network device determines that the capability included in the capability information is the full capability or the unfiltered capability of the terminal device, even if the capability in the capability information is different from a capability of interest to the second network device, for example, when a band included in the capability information is different from a band of interest to the second network device, for example, if the second network device has an additional band of interest, a target network device does not trigger a capability enquiry of the terminal device either. In this way, in a scenario in which the terminal device is handed over from the first network device to the second network device, the second network device may determine that the capability information of the terminal device does not include the filter condition, and learn that the terminal device does not support the capability filtering, and the capability information of the terminal device is the full capability or the unfiltered capability, so that the second network device does not trigger an unnecessary secondary capability enquiry procedure, thereby avoiding signaling overheads caused by unnecessary capability reporting.

Certainly, the first network device may alternatively send the capability information to a core network device (for example, an AMF), where the capability information includes the indication information and/or does not include the filter condition. When the first network device and the second network device are connected to a same core network device, the second network device may also obtain the capability information of the terminal device from the core network device.

It should be further understood that, in the method 400, the foregoing step S450 and step S460 are also optional steps, that is, the method 400 may alternatively not include the foregoing step S450 and step S460.

According to the capability information transmission method provided in this embodiment of this application, "the capability information includes the indication information and/or does not include the filter condition" indicates to the network device that the terminal device does not support capability filtering, the capability reported by the terminal device is the full capability or the unfiltered capability, or the terminal device does not perform the capability filtering procedure, so that the network device determines that the terminal device does not support the capability filtering. This ensures that the terminal device and the network device have a consistent understanding of whether the terminal device supports the capability filtering, and ensures interoperability and compatibility between the terminal device and the network device. When reporting the capability of the terminal device to the first network device, the terminal device may not perform capability filtering. In this way, implementation complexity of the terminal device can be reduced, and costs of the terminal device can be reduced. In addition, because the capability information includes the indication information and/or does not include the filter condition, the network device may not perform secondary capability enquiry on the terminal device, thereby reducing signaling overheads and communication resource overheads caused by repeated enquiry and reporting of the capability information of the terminal device. When the terminal device moves to a cell managed by another network device (not limited to the first network device) in a same RNA, if the another network device (for example, the second network device) can obtain the capability information of the terminal device from the first network device or the core network device, or may determine, based on the capability information including the indication information and/or not including the filter condition, that the terminal device does not perform capability filtering, and the capability information of the terminal device is the full capability, the another network device does not trigger the capability enquiry procedure again either, thereby avoiding signaling overheads caused by repeated capability enquiry and reporting.

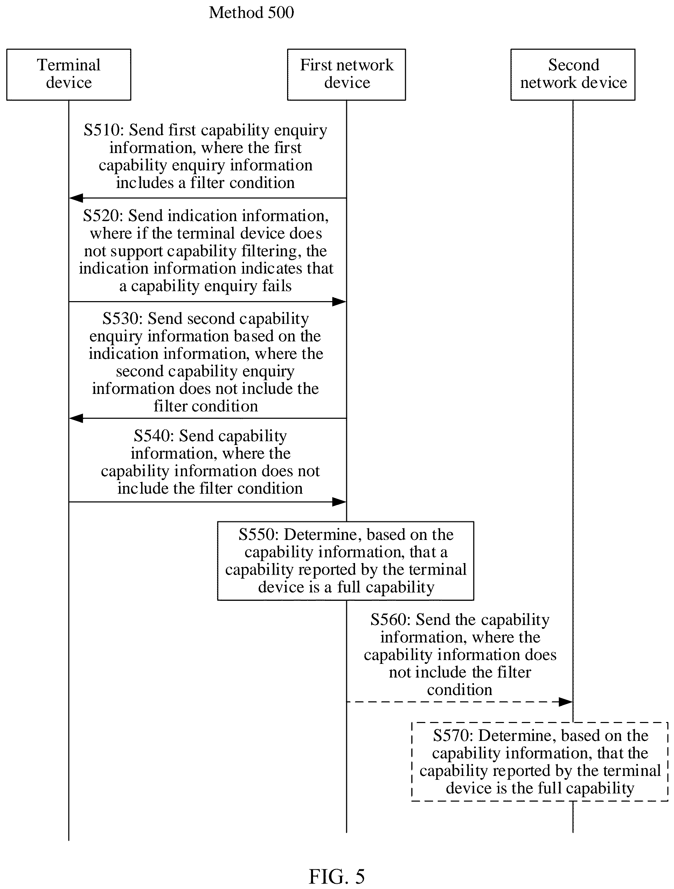

FIG. 5 is a schematic flowchart of another example of a capability information transmission method according to an embodiment of this application. As shown in FIG. 5, the method 500 shown in FIG. 5 may include S510 to S570. The following describes steps in the method 500 in detail with reference to FIG. 5.

S510: A first network device sends first capability enquiry information to a terminal device, where the first capability enquiry information includes a filter condition.

Correspondingly, the terminal device receives the first capability enquiry information.

For example, the first network device may send the first capability enquiry information (for example, a UE capability enquiry) to the terminal device, where the first capability enquiry information carries the filter condition. For example, the first capability enquiry information may include a capability filter condition field (for example, a FrequencyBandListFilter field), and the "FrequencyBandListFilter" field indicates a band filter condition. That is, a capability enquiry with the filter condition is used by the first network device.

S520: After receiving the first capability enquiry information, the terminal device sends indication information to the first network device, where if the terminal device does not support capability filtering, the indication information indicates that the capability enquiry fails.

Correspondingly, the first network device receives the indication information.

In some possible implementations, if the terminal device does not support the capability filtering, the terminal device may send the indication information (the indication information may also be referred to as capability enquiry failure information) in response to the first capability enquiry information to the first network device, where the indication information indicates, to the first network device, that the capability enquiry fails.

In this embodiment, the indication information may further indicate a failure cause of the capability enquiry, that is, the terminal device does not support the capability filtering. In other words, the indication information may further indicate that the terminal device does not support the capability filtering, or indicate that the terminal device does not support a capability enquiry procedure including the filter condition in being used by the network device. For example, the filter condition is the band filter condition.

S530: The first network device sends second capability enquiry information to the terminal device based on the indication information, where the second capability enquiry information does not include the filter condition.

Correspondingly, the terminal device receives the second capability enquiry information.

In some possible implementations, because the indication information indicates that the terminal device does not support the capability filtering (that is, indicates that a capability reported by the terminal device is a full capability or an unfiltered capability, or indicates that the terminal device does not perform a capability filtering procedure), the capability enquiry with the filter condition is not used by the first network device. In other words, when the indication information indicates that the capability enquiry fails, the first network device does not filter or screen the capability of the terminal device when the first network device enquires the capability of the terminal device. In this case, the second capability enquiry information (for example, a UE capability enquiry) sent by the first network device to the terminal device does not carry the filter condition. For example, the filter condition may be a filter condition used to filter a band capability.

For example, the second capability enquiry information may not include a frequency band list filter (frequencyBandListFilter) field, and the field indicates the filter condition of the band capability.

In the foregoing manner, the network device can determine whether the terminal device supports the capability filtering. This ensures that the terminal device and the network device have a consistent understanding of whether the terminal device supports the capability filtering, and ensures interoperability and compatibility between the terminal device and the network device. In addition, when the terminal device does not support the capability filtering, the capability enquiry with the filter condition may be unnecessarily used by the network device, so that a size of the capability enquiry information can be reduced (because the second capability enquiry information does not include the filter condition), and consumption of communication resources can be reduced.

S540: After receiving the second capability enquiry information, the terminal device sends capability information to the first network device, where the capability information does not include the filter condition.

Correspondingly, the first network device receives the capability information.

S550: The first network device determines, based on the capability information, that the capability reported by the terminal device is the full capability.

In S530, the first network device has determined that the terminal device does not support the capability filtering. When the terminal device does not support the capability filtering, the capability enquiry information sent by the first network device to the terminal device may not include the filter condition. Therefore, in S540, when reporting the capability of the terminal device to the first network device, the terminal device may not perform capability filtering. In this way, implementation complexity of the terminal device can be reduced, and costs of the terminal device can be reduced. In other words, the terminal device may report the full capability (or may be referred to as the unfiltered capability) of the terminal device to the first network device in the capability information (for example, the UE capability information). For example, the full capability of the terminal device may include all bands and band combinations that can be supported by hardware of the terminal device.

When the terminal device does not support the capability filtering, the second capability enquiry information sent by the first network device does not include the filter condition. In this case, the capability information sent by the terminal device to the first network device may alternatively not include an applied filter condition. For example, the capability information (for example, UE capability information) may not include an applied frequency band list filter (appliedFreqBandListFilter) field, and the field originally indicates the filter condition that is of the band capability and that is sent by the first network device.

In a possible implementation, in S520, the first network device has determined that the terminal device does not support the capability filtering, the capability reported by the terminal device is the full capability or the unfiltered capability, or the terminal device does not perform the capability filtering procedure. Therefore, in S550, after receiving the capability information, the first network device may determine that the capability reported by the terminal device in the capability information is the full capability or the unfiltered capability of the terminal device.

In another possible implementation, in this embodiment, the capability information reported by the terminal device does not include the applied filter condition. For example, the capability information (for example, the UE capability information) may not include a field indicating the filter condition. For example, the field may be an applied frequency band list filter (appliedFreqBandListFilter) field. That is, the capability information does not include the applied frequency band list filter (appliedFreqBandListFilter) field, and the field originally indicates, in a mirroring mode, the filter condition used by the first network device to enquire the capability. In this case, because the capability information reported by the terminal device does not include the filter condition, "the capability information does not include the applied filter condition" may also be used as implicit indication information, to indicate, to the first network device, that the terminal device does not support the capability filtering (for example, band filtering), the capability reported by the terminal device is the full capability or the unfiltered capability, or the terminal device does not perform the capability filtering procedure. Because the capability information reported by the terminal device does not include the filter condition, in S550, after the first network device receives the capability information, because the capability information does not include the filter condition, the first network device may determine that the capability in the capability information is the full capability or the unfiltered capability of the terminal device.

For example, when the second capability enquiry information sent by the first network device does not include the filter condition, if the terminal device does not support the capability filtering, the terminal device does not backfill "apppliedFreqBandListFilter" in the reported capability information, in other words, the capability information reported by the terminal device does not include the "appliedFreqBandListFilter" field. That the capability information reported by the terminal device does not include the "appliedFreqBandListFilter" field may indicate that the terminal device does not support band capability filtering, the capability reported by the terminal device is the full capability or the unfiltered capability, or the terminal device does not perform the capability filtering procedure.

S560: The first network device sends the capability information to a second network device, where the capability information does not include the filter condition.

Optionally, the capability information in S540 and S560 may further include the indication information, and the indication information indicates that the terminal device does not support the capability filtering.

Correspondingly, the second network device receives the capability information.

S570: The second network device determines, based on the capability information, that the capability reported by the terminal device is the full capability.

For descriptions of steps S560 and S570, refer to the descriptions of steps S450 and S460 in the method 400. For brevity, details are not described herein again.

It should be further understood that, in the method 500, the foregoing steps S560 and S570 are optional steps, that is, the method 500 may alternatively not include S560 and S570.

According to the capability information transmission method provided in this application, the terminal device and the network device perform handshake (steps S510 and 520), so that the network device determines that the terminal device does not support the band capability. This ensures that the terminal device and the network device have a consistent understanding of whether the terminal device supports the capability filtering, and ensures interoperability and compatibility between the terminal device and the network device. When reporting the capability of the terminal device to the first network device, the terminal device may not perform capability filtering. In this way, implementation complexity of the terminal device can be reduced, and costs of the terminal device can be reduced. In addition, because the capability information includes the indication information and/or does not include the filter condition, the network device may not perform a secondary capability enquiry on the terminal device, thereby reducing signaling overheads and communication resource overheads caused by repeated enquiry and reporting of the capability information of the terminal device. When the terminal device moves to a cell managed by another network device (not limited to the first network device) in a same RNA, if the another network device (for example, the second network device) can obtain the capability information of the terminal device from the first network device or a core network device, and may determine, based on the capability information including the indication information and/or not including the filter condition, that the terminal device does not perform capability filtering, and the capability information of the terminal device is the full capability, the another network device does not trigger the capability enquiry procedure again either, thereby avoiding signaling overheads caused by repeated capability enquiry and reporting.

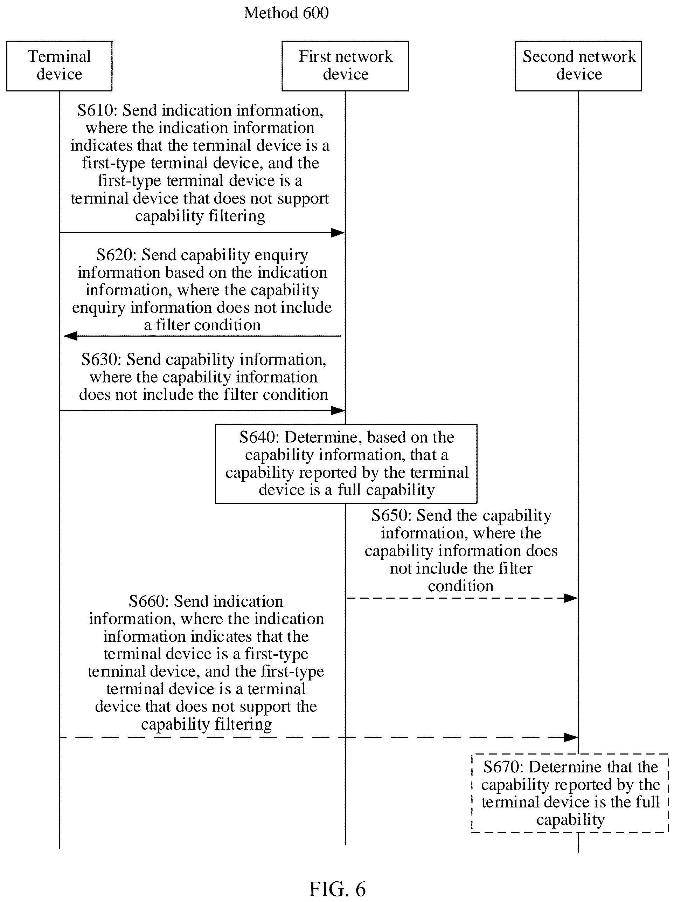

FIG. 6 is a schematic flowchart of another example of a capability information transmission method according to an embodiment of this application. As shown in FIG. 6, the method 600 shown in FIG. 6 may include S610 to S670. The following describes steps in the method 600 in detail with reference to FIG. 6.

S610: A terminal device sends indication information to a first network device, where the indication information indicates that the terminal device is a first-type terminal device, and the first-type terminal device is a terminal device that does not support capability filtering.

Correspondingly, the first network device receives the indication information.

In this embodiment of this application, it may be pre-specified in a protocol that the first-type terminal device does not perform capability filtering (which may also be referred to as not supporting the capability filtering). That the first-type terminal device does not perform capability filtering may be understood as that a capability reported by the first-type terminal device is a full capability or an unfiltered capability, or the first-type terminal device does not perform a capability filtering procedure.

For example, the first-type terminal device may be enhanced REDCAP UE, REDCAP UE that supports a 3GPP Rel-18 version, REDCAP UE that supports Rel-18 and later versions, or the like. Certainly, in another implementation of this application, the first-type terminal device may alternatively be another terminal device, provided that the first-type terminal device does not support the capability filtering. This is not limited in embodiments of this application.

For example, the indication information may be sent to the first network device in an implicit or explicit manner, for example, sent to the first network device by using a random access message 1 (MSG1) or a random access message 3 (MSG3). For example, a specific random access preamble (preamble) sequence or a specific random access channel (PRACH) resource location for sending a preamble identifies (implicitly indicates) that the terminal device is the first-type terminal device, or a specific logical channel identifier for sending the random access message 3 implicitly indicates that the terminal device is the first-type terminal device. Alternatively, the indication information may be explicitly carried in an "RRC Connection Request" message sent by the terminal device to the first network device. For example, the indication information is one or more bits. A form of the indication information is not limited in this embodiment of this application.

S620: The first network device sends capability enquiry information to the terminal device based on the indication information, where a capability enquiry does not include a filter condition.

After receiving the indication information, the first network device may determine that the terminal device is the first-type terminal device. Because the first-type terminal device does not support the capability filtering, when the first network device enquires the capability of the terminal device, a capability enquiry without the filter condition can be used (a capability enquiry with the filter condition is not used).

After determining that the terminal device is the first-type terminal device, the capability enquiry information (for example, a UE capability enquiry) sent by the first network device to the terminal device does not carry (does not include) the filter condition. For example, the filter condition may be a filter condition used to filter a band capability, the capability enquiry information may not include a frequency band list filter (frequencyBandListFilter) field, and the field indicates the filter condition of the band capability.

S630: After receiving the capability enquiry information, the terminal device sends capability information to the first network device, where the capability information does not include the filter condition.

S640: The first network device determines that the capability reported by the terminal device is the full capability.

Because the terminal device does not support the capability filtering, when the terminal device reports the capability of the terminal device to the first network device, the terminal device may not perform capability filtering. In this way, implementation complexity of the terminal device can be reduced, and costs of the terminal device can be reduced. In other words, the terminal device may report the full capability (or may be referred to as the unfiltered capability) of the terminal device to the first network device in capability information (for example, UECapabilityInformation). For example, the full capability of the terminal device may include all bands and band combinations that can be supported by hardware of the terminal device.

In a possible implementation, when the terminal device does not support the capability filtering, the capability enquiry information sent by the first network device does not include the filter condition. In this case, in S630, the capability information sent by the terminal device to the first network device may not include the filter condition. For example, the capability information (for example, UE capability information) may not include an applied frequency band list filter (appliedFreqBandListFilter) field, and the field originally indicates the filter condition that is of the band capability and that is sent by the first network device. Because the first network device has learned that the terminal device is the first-type terminal device in S610, the first network device may determine that the capability reported by the terminal device in the capability information in S630 is the full capability or the unfiltered capability of the terminal device.

S650: The first network device sends the capability information to a second network device, where the capability information does not include the filter condition.

Correspondingly, the second network device receives the capability information.

In some possible implementations, when the terminal device is handed over from a cell of the first network device to a cell of the second network device, the second network device may obtain context (UE context) information of the terminal device from the first network device, where the context information includes the capability information of the terminal device. That is, the first network device may send the capability information to the second network device, where the capability information does not include the filter condition.

Certainly, the first network device may alternatively send the capability information to a core network device (for example, an AMF), where the capability information does not include the filter condition. When the first network device and the second network device are connected to a same core network device, the second network device may also obtain the capability information of the terminal device from the core network device.

S660: The terminal device sends indication information to the second network device, where the indication information indicates that the terminal device is a first-type terminal device, and the first-type terminal device is a terminal device that does not support the capability filtering.

Correspondingly, the second network device receives the indication information.

For descriptions of S660, refer to the descriptions of S610. For brevity, details are not described herein again.

S670: The second network device determines that the capability reported by the terminal device is the full capability.

Because the second network device has learned that the terminal device is the first-type terminal device in S660, the second network device may determine that the capability reported by the terminal device in the capability information is the full capability or the unfiltered capability of the terminal device.

In this way, in a scenario in which the terminal device is handed over from the first network device to the second network device, the second network device may determine that the terminal device does not support the capability filtering, and the capability information of the terminal device is the full capability or the unfiltered capability, so that the second network device does not trigger an unnecessary secondary capability enquiry procedure, thereby avoiding signaling overheads caused by unnecessary capability reporting.

It should be further understood that, in the method 600, the foregoing steps S650 to S670 are optional steps, that is, the method 600 may alternatively not include S650 and S670.

According to the capability information transmission method provided in this application, it is specified that the first-type terminal device does not perform capability filtering, and the terminal device indicates, to the network device, that the terminal device is the first-type terminal device, so that the network device determines that the terminal device does not support a band capability. This ensures that the terminal device and the network device have a consistent understanding of whether the terminal device supports the capability filtering, and ensures interoperability and compatibility between the terminal device and the network device. In addition, the network device may either not perform a secondary capability enquiry on the terminal device, thereby reducing signaling overheads and communication resource overheads caused by repeated enquiry and reporting of the capability information of the terminal device. When the terminal device moves to a cell managed by another network device (not limited to the first network device) in a same RNA, if the another network device (for example, the second network device) can determine that the terminal device is the first-type terminal device, the another network device determines that the terminal device does not perform capability filtering, and the capability information of the terminal device is the full capability, so that the another network device does not trigger the capability enquiry procedure again either, thereby avoiding signaling overheads caused by repeated capability enquiry and reporting.

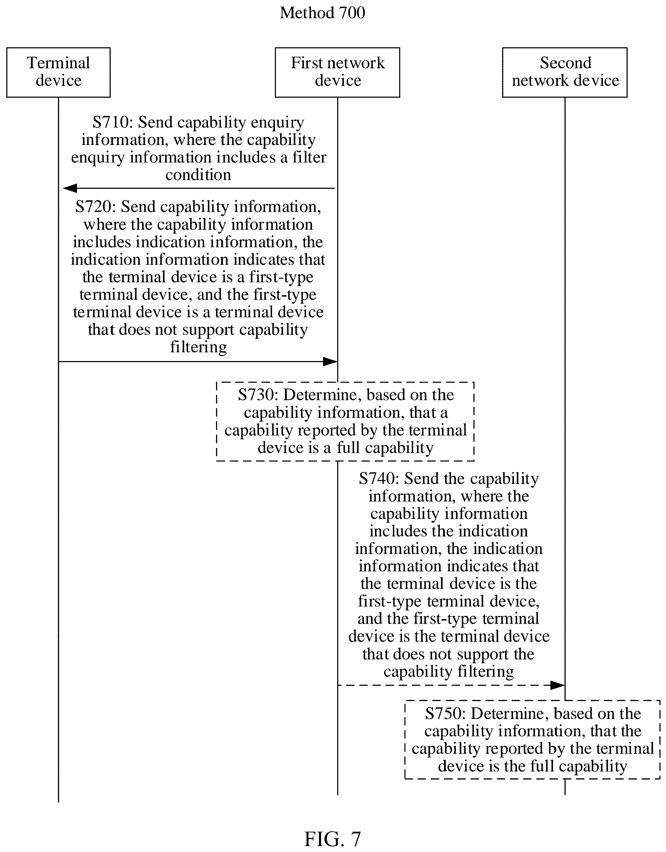

FIG. 7 is a schematic flowchart of another example of a capability information transmission method according to an embodiment of this application. As shown in FIG. 7, the method 700 shown in FIG. 7 may include S710 to S750. The following describes steps in the method 700 in detail with reference to FIG. 7.

S710: A first network device sends capability enquiry information to a terminal device, where the capability enquiry information includes a filter condition.

Correspondingly, the terminal device receives the capability enquiry information.

For example, the capability enquiry information may be UE capability enquiry, and the capability enquiry information carries a filter condition. For example, the filter condition may be a filter condition used to filter a band capability, the capability enquiry information may include a frequency band list filter (frequencyBandListFilter) field, and the field indicates the filter condition of the band capability.

S720: The terminal device sends capability information to the first network device based on the capability enquiry information, where the capability information includes indication information, the indication information indicates that the terminal device is a first-type terminal device, and the first-type terminal device is a terminal device that does not support capability filtering.

Optionally, the capability information may include or not include the filter condition.

Correspondingly, the first network device receives the capability information.

S730: The first network device determines, based on the capability information, that a capability reported by the terminal device is a full capability.

In this embodiment of this application, it may be pre-specified in a protocol that the first-type terminal device does not perform capability filtering (which may also be referred to as not supporting the capability filtering). That the first-type terminal device does not perform capability filtering may be understood as that a capability reported by the first-type terminal device is a full capability or an unfiltered capability, or the first-type terminal device does not perform a capability filtering procedure.

Because the terminal device does not support the capability filtering, when the terminal device reports the capability of the terminal device to the first network device, the terminal device may not perform capability filtering. In this way, implementation complexity of the terminal device can be reduced, and costs of the terminal device can be reduced. In other words, the terminal device may report the full capability (or may be referred to as the unfiltered capability) of the terminal device to the first network device in capability information (for example, UECapabilityInformation). For example, the full capability of the terminal device may include all bands and band combinations that can be supported by hardware of the terminal device.

In a possible implementation, the capability information includes the filter condition. For example, the capability information (for example, the UE capability enquiry) includes a field indicating the filter condition. For example, the field may be an applied frequency band list filter (appliedFreqBandListFilter) field. That is, the capability information includes the applied frequency band list filter (appliedFreqBandListFilter) field, and the field indicates the filter condition sent by the first network device.

In another possible implementation, the capability information does not include the filter condition. For example, the capability information (for example, the UE capability enquiry) does not include a field indicating the filter condition. For example, the field may be an applied frequency band list filter (appliedFreqBandListFilter) field. That is, the capability information does not include the applied frequency band list filter (appliedFreqBandListFilter) field, and the field indicates the filter condition sent by the first network device.

After receiving the capability information, the first network device may determine, based on the indication information in the capability information, that the terminal device is the first-type terminal device. After determining that the terminal device is the first-type terminal device, the first network device may determine that the capability in the capability information reported by the terminal device is the full capability of the terminal device. In this way, the first network device may not perform a secondary capability enquiry on the terminal device (for example, change the filter condition used by the first network device), thereby reducing signaling overheads and communication resource overheads caused by repeated reporting of the capability information.

For example, the indication information may alternatively be version information carried in the capability information. Certainly, in another implementation of this application, the indication information may alternatively be implemented in another manner. This is not limited in embodiments of this application.

S740: The first network device sends the capability information to the second network device, where the capability information includes the indication information, the indication information indicates that the terminal device is the first-type terminal device, and the first-type terminal device is a terminal device that does not support the capability filtering.

Optionally, the capability information may include or not include the filter condition.

Correspondingly, the second network device receives the capability information.

S750: The second network device determines, based on the capability information, that the capability reported by the terminal device is the full capability.

In some possible implementations, when the terminal device is handed over from a cell of the first network device to a cell of the second network device, or the terminal device performs cell selection or cell reselection and accesses the cell of the second network device, the second network device may obtain context (UE context) information of the terminal device from the first network device, where the context information includes the capability information of the terminal device. That is, the first network device may send the capability information to the second network device, where the capability information includes the indication information.

After receiving the capability information, the second network device may determine, based on the indication information in the capability information, that the terminal device is the first-type terminal device. After determining that the terminal device is the first-type terminal device (that is, determining that the capability included in the capability information is the full capability of the terminal device), the second network device may alternatively determine that the capability in the capability information is the full capability of the terminal device.

When the second network device determines that the capability included in the capability information is the full capability of the terminal device, even if the capability in the capability information is different from a capability of interest to the second network device, for example, when the band included in the capability information is different from a band of interest to the second network device, for example, if the second network device has an additional band of interest, the second network device does not trigger a capability enquiry of the terminal device. In this way, in a scenario in which the terminal device is handed over from the first network device to the second network device, the second network device may determine, based on the indication information in the capability information, that the terminal device is the first-type terminal device. After determining that the terminal device is the first-type terminal device, the second network device learns that the terminal device does not support the capability filtering, and the capability information of the terminal device is the full capability or the unfiltered capability, so that the second network device does not trigger an unnecessary secondary capability enquiry procedure, thereby avoiding signaling overheads caused by unnecessary capability reporting.

Certainly, the first network device may alternatively send the capability information to a core network device (for example, an AMF), where the capability information includes the indication information. When the first network device and the second network device are connected to a same core network device, the second network device may also obtain the capability information of the terminal device from the core network device, to determine, based on the indication information in the capability information, that the terminal device is the first-type terminal device. After determining that the terminal device is the first-type terminal device, the second network device learns that the terminal device does not support the capability filtering, and the capability information of the terminal device is the full capability or the unfiltered capability, so that the second network device does not trigger an unnecessary secondary capability enquiry procedure, thereby avoiding signaling overheads caused by unnecessary capability reporting.

It should be further understood that, in the method 700, the foregoing step S740 and step S750 are also optional steps, that is, the method 700 may alternatively not include the foregoing step S740 and step S750.

According to the capability information transmission method provided in this application, it is pre-specified that the first-type terminal device does not perform capability filtering. After receiving the capability information reported by the terminal device, the network device determines, based on the indication information in the capability information, that the terminal device is the first-type terminal device. This ensures that the terminal device and the network device have a consistent understanding of whether the terminal device supports the capability filtering, and ensures interoperability and compatibility between the terminal device and the network device. In addition, the network device may either not perform the secondary capability enquiry on the terminal device, thereby reducing signaling overheads and communication resource overheads caused by repeated enquiry and reporting of the capability information of the terminal device. When the terminal device moves to a cell managed by another network device (not limited to the first network device) in a same RNA, if the another network device (for example, the second network device) can determine that the terminal device is the first-type terminal device, the another network device determines that the terminal device does not perform capability filtering, and the capability information of the terminal device is the full capability, so that the another network device does not trigger the capability enquiry procedure again either, thereby avoiding signaling overheads caused by repeated capability enquiry and reporting.

It should be further understood that, in the method 600, the capability information in S630 and S650 may further include indication information. The indication information indicates that the terminal device is the first-type terminal device, and the first-type terminal device is a terminal device that does not support the capability filtering. In this case, the first network device may alternatively determine, based on the indication information in the capability information, that the terminal device is the first-type terminal device, that is, determine that the capability included in the capability information is the full capability of the terminal device. Alternatively, the second network device may determine, based on the indication information in the capability information, that the terminal device is the first-type terminal device. After determining that the terminal device is the first-type terminal device (that is, determining that the capability included in the capability information is the full capability of the terminal device), the second network device may alternatively determine that the capability reported by the terminal device is the full capability of the terminal device. Optionally, in this case, the method 600 may alternatively not include S660.

It should be further understood that, in the foregoing method 700, before S710, the method 700 may also include S610 in the foregoing method 600. To be specific, before S710, the terminal device may alternatively implicitly or explicitly indicate, to the first network device in a random access process, that the terminal device is the first-type terminal device, and the first network device may alternatively determine, based on the implicit or explicit indication information in the random access process, that the terminal device is the first-type terminal device, that is, determine that the capability included in the capability information is the full capability of the terminal device. Optionally, in this case, the indication information sent in S710 may alternatively not include the filter condition, and the capability information in S720 may alternatively not include the indication information indicating that the terminal device is the first-type terminal device. In this case (that is, the capability information in S720 does not include the indication information), the second network device may alternatively determine, by using a random access message 1 (MSG1) or a random access message 3 (MSG3) of the terminal device in the random access process, that the terminal device is the first-type terminal device, to determine that the capability reported by the terminal device is the full capability of the terminal device. In other words, the method 700 may alternatively include S660.

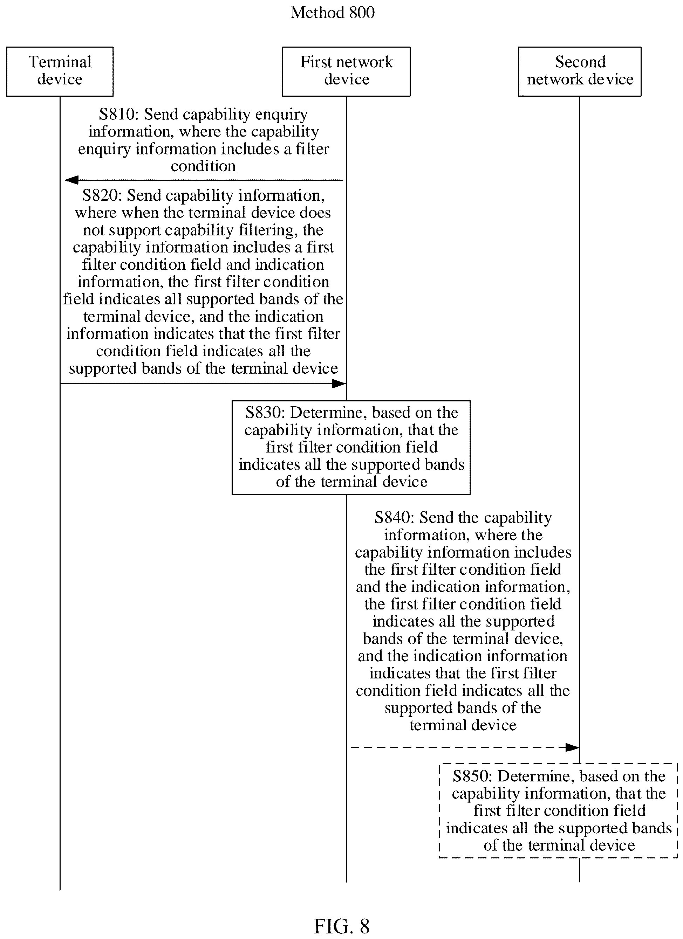

FIG. 8 is a schematic flowchart of another example of a capability information transmission method according to an embodiment of this application. As shown in FIG. 8, the method 800 shown in FIG. 8 may include S810 to S850. The following describes steps in the method 800 in detail with reference to FIG. 8.

S810: A first network device sends capability enquiry information to a terminal device, where the capability enquiry information includes a filter condition.

Correspondingly, the terminal device receives the capability enquiry information.

In a possible implementation, when enquiring a capability of the terminal device, the first network device may filter or screen the capability of the terminal device. For example, the filter condition may be a filter condition used to filter a band capability, the capability enquiry information may include a frequency band list filter (frequencyBandListFilter) field, and the field indicates the filter condition of the band capability.

S820: After receiving the capability enquiry information, the terminal device sends capability information to the first network device, where when the terminal device does not support capability filtering, the capability information includes a first filter condition field and indication information, the first filter condition field indicates all supported bands of the terminal device, and the indication information indicates that the first filter condition field indicates all the supported (or non-filtered) bands of the terminal device.

Correspondingly, the first network device receives the capability information.

In this embodiment, in a possible implementation, if the terminal device does not support the capability filtering, in response to the capability enquiry information, the terminal device sends the capability information to the first network device, where the capability information includes all band capabilities that can be supported by hardware of the terminal and a band combination capability including these bands. The capability information further includes the first filter condition field. For example, the first filter condition field is an "appliedFreqBandListFilter" field. The first filter condition field originally indicates, in a mirroring mode, the filter condition sent by the first network device in S810. However, in the method 800, content carried in the first filter condition field is changed. Because the capability filtering is not used for the terminal device, the terminal device fills, in the first filter condition field such as "appliedFreqBandListFilter", all the bands that can be supported as an actually applied filter condition. In other words, a function of the first filter condition field is changed, so that the first filter condition field carries all the bands that can be supported by the terminal device.

For example, the "appliedFreqBandListFilter" field indicates (carries) all the bands that can be supported by the terminal device.

In this embodiment, the capability information may further include the indication information, and the indication information indicates that the first filter condition field indicates all the supported (or non-filtered) bands of the terminal device. For example, the indication information may indicate that the "appliedFreqBandListFilter" field indicates all the supported bands of the terminal device. All the supported bands of the terminal device may also be understood as a capability of supporting unfiltered bands by the terminal device.

For example, a length of the indication information may be 1 bit (bit). Certainly, in another implementation of this application, a length of the indication information may alternatively be greater than 1 bit. This is not limited in embodiments of this application.

In this embodiment, in another possible implementation, in S820, the capability information reported by the terminal device may further include a second filter condition field (which is a field different from the first filter condition field), and the second filter condition field indicates a band filter condition actually used when the terminal device reports the capability information. In this embodiment, the frequency filter condition actually used by the terminal device is all the supported bands of the terminal device. In this case, the first filter condition field in the capability information indicates, in a mirroring mode, the filter condition in the capability enquiry information sent by the first network device, and bands indicated by the second filter condition field may be the same as or different from filtered bands enquired by the first network device (namely, bands enquired by the first network device in the capability enquiry information). In addition, the capability information may not include the indication information.

For example, when the first network device enquires the capability of the terminal device, the capability enquiry information (for example, a UE capability enquiry) carries (includes) the filter condition. For example, the capability enquiry information may include a frequency band list filter (frequencyBandListFilter) field, and the "frequencyBandListFilter" field indicates a band filter condition. For example, if the "frequencyBandListFilter" field indicates a frequency band list A, and the first filter condition field (for example, "appliedFreqBandListFilter") in the capability information indicates a frequency band list B, the frequency band list B may be the same as the frequency band list A (that is, the two frequency band lists include same bands); or the frequency band list A may be different from the frequency band list B. For example, the frequency band list B may be a subset of the frequency band list A, that is, all the supported bands of the terminal device are less than bands enquired by the first network device; or the frequency band list A may be a subset of the frequency band list B, that is, all the supported bands of the terminal device are more than bands enquired by the first network device; or there is no mutual inclusion relationship between bands in the frequency band list A and bands in the frequency band list B.

For example, it is assumed that the frequency band list (namely, the frequency band list indicated by the "frequencyBandListFilter" field) enquired by the first network device is {band 1, band 2, band 3}. If the first filter condition field (for example, "appliedFreqBandListFilter") indicates that the frequency band list is {band 1, band 2, band 3}, the frequency band list enquired by the first network device is the same as the frequency band list reported by the terminal device. If the first filter condition field indicates that the frequency band list is {band 1, band 2}, the bands enquired by the first network device are more than the bands reported by the terminal device. If the first filter condition field indicates that the frequency band list is {band 1, band 2, band 3, band 4}, the bands enquired by the first network device are less than the bands reported by the terminal device. If the frequency band list indicated by the first filter condition field is {band 5, band 6}, there is no mutual inclusion relationship with the bands enquired by the first network device.

It should be understood that the second filter condition field may alternatively be the same as or different from the filtered bands enquired by the network device.

S830: The first network device determines, based on the capability information, that the first filter condition field indicates all the supported bands of the terminal device.

After the first network device receives the capability information reported by the terminal device, if the first network device can identify the indication information or the second filter condition field in the capability information, for example, the first network device may be a network device implemented according to a 3GPP R18 protocol version, in a possible implementation, the first network device may determine, based on the indication information in the capability information, that the first filter condition field indicates all the supported bands of the terminal device. Alternatively, the first network device may determine, based on the second filter condition field in the capability information, that the frequency filter condition actually used by the terminal device is all the supported bands of the terminal device. In this case, the first network device may determine that a capability in the capability information reported by the terminal device is all the bands supported (or unfiltered) by the terminal device.

The first network device determines that the capability reported by the terminal device is a full capability, so that the first network device may not perform a secondary capability enquiry on the terminal device (for example, change a filter condition used by the first network device), thereby reducing communication resource overheads.

In another possible implementation, after the first network device receives the capability information reported by the terminal device, if the first network device cannot identify the indication information or the second filter condition field in the capability information, for example, the first network device may be a network device implemented according to a 3GPP R17 protocol version, the first network device may identify the first filter condition field (for example, the "appliedFreqBandListFilter" field) in the capability information, and may learn of, from the field, all the supported bands of the terminal device. If a band of interest to the first network device is within a band range indicated by the "appliedFreqBandListFilter" field, the first network device does not trigger the secondary capability enquiry either. In this way, compatibility between the terminal device and the first network device can be improved, and an incompatibility consequence is not caused, for example, the terminal device cannot access a cell for a reason that the first network device considers that an error occurs in the reporting of the capability of the terminal device because the capability information reported by the terminal device does not include the "appliedFreqBandListFilter" field. In addition, the terminal device reports the "appliedFreqBandListFilter" field based on all the supported band capabilities, so that a probability that the first network device triggers the secondary capability enquiry can be reduced to some extent, because a range of all the supported bands of the terminal device is usually not less than a range of bands of interest to the first network device.

S840: The first network device sends the capability information to a second network device, where the capability information includes the first filter condition field and the indication information, the first filter condition field indicates all the supported bands of the terminal device, and the indication information indicates that the first filter condition field indicates all the supported (or non-filtered) bands of the terminal device.

Correspondingly, the second network device receives the capability information.

S850: The second network device determines, based on the capability information, that the first filter condition field indicates all the supported bands of the terminal device.

In some possible implementations, when the terminal device is handed over from a cell of the first network device to a cell of the second network device, or the terminal device performs cell selection or cell reselection and accesses the cell of the second network device, the second network device may obtain context (UE context) information of the terminal device from the first network device, where the context information includes the capability information of the terminal device. That is, the first network device may send the capability information to the second network device.

If the second network device can identify the indication information or the second filter condition field in the capability information, for example, the second network device may be a network device implemented according to the 3GPP R18 protocol version, in a possible implementation, the second network device may determine, based on the indication information in the capability information, that the first filter condition field indicates all the supported bands of the terminal device, or the second network device may determine, based on the second filter condition field in the capability information, that the frequency filter condition actually used by the terminal device is all the supported bands of the terminal device. In this case, the second network device may determine that a capability in the capability information reported by the terminal device is all the supported bands of the terminal device.

After the second network device determines that the capability reported by the terminal device is all the supported bands of the terminal device, even if the capability in the capability information is different from a capability of interest to the second network device, for example, the band included in the capability information is different from a band of interest to the second network device, for example, the second network device has an additional band of interest, the second network device does not trigger the capability enquiry of the terminal device either. In this way, the second network device may not perform a secondary capability enquiry on the terminal device, thereby reducing communication resource overheads.

If the second network device cannot identify the indication information or the second filter condition field in the capability information, for example, the first network device may be a network device implemented according to the 3GPP R17 protocol version, the second network device may identify the first filter condition field (for example, the "appliedFreqBandListFilter" field) in the capability information, and may learn of, by using the first filter condition field, all the supported bands of the terminal device. If a band of interest to the second network device is within a band range indicated by the "appliedFreqBandListFilter" field, the second network device does not trigger the secondary capability enquiry either. In this way, compatibility between the terminal device and the second network device can be improved, and an incompatibility consequence is not caused, for example, the terminal device cannot access a cell for a reason that the second network device considers that an error occurs in the reporting of the capability of the terminal device because the capability information reported by the terminal device does not include the "appliedFreqBandListFilter" field. In addition, the terminal device reports the "appliedFreqBandListFilter" field based on all the supported band capabilities, so that a probability that the second network device triggers the secondary capability enquiry can be reduced to some extent, because a range of all the supported bands of the terminal device is usually not less than a range of the bands of interest to the second network device.

Certainly, the first network device may alternatively send the capability information to a core network device (for example, an AMF), where the capability information includes the first filter condition field and the indication information, the first filter condition field indicates all the supported bands of the terminal device, and the indication information indicates that the first filter condition field indicates all the supported (or non-filtered) bands of the terminal device. When the first network device and the second network device are connected to a same core network device, the second network device may also obtain the capability information of the terminal device from the core network device.

It should be further understood that, in the method 800, the foregoing step S840 and step S850 are also optional steps, that is, the method 800 may alternatively not include the foregoing step S840 and step S850.

According to the capability information transmission method provided in this application, the "appliedFreqBandListFilter" field in the capability information is used to carry all the supported bands of the terminal device, and the capability information indicates, by using the indication information, that the "appliedFreqBandListFilter" field carries all the supported bands of the terminal device. This ensures that the terminal device and the network device have a consistent understanding of whether the terminal device supports the capability filtering, and ensures interoperability and compatibility between the terminal device and the network device. In addition, compatibility between the terminal device and the network device can be improved, and a probability of triggering the secondary capability enquiry by the network device (for example, a network device implemented in a 3GPP R17 protocol version) is reduced to some extent.

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing method embodiments may be unnecessary, or some steps may be newly added. Alternatively, any two or more of the foregoing embodiments are combined. A modified, changed, or combined solution also falls within the scope of embodiments of this application.

It should be further understood that division into manners, cases, categories, and embodiments in embodiments of this application is merely intended for ease of description, and should not constitute a particular limitation. Features in the manners, categories, cases, and embodiments may be combined without contradiction.

It should be further understood that various numbers used in embodiments of this application are merely used for differentiation for ease of description, but are not intended to limit the scope of embodiments of this application. The sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of embodiments of this application emphasize differences between embodiments. For same or similar parts that are not mentioned, refer to embodiments. For brevity, details are not described herein again.

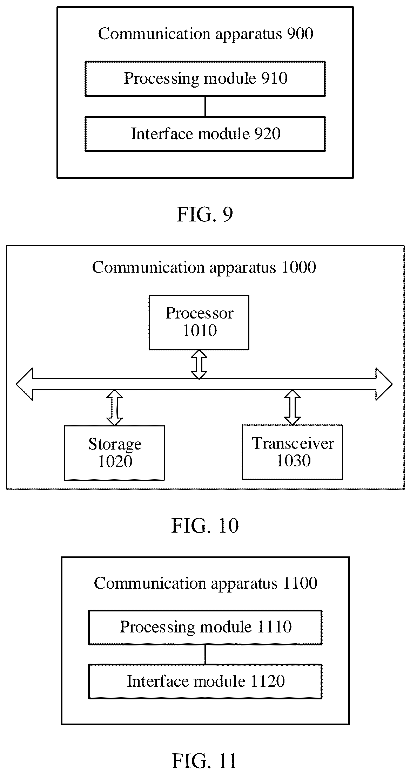

The foregoing describes in detail the methods in embodiments of this application with reference to FIG. 1 to FIG. 8. The following describes in detail communication apparatuses in embodiments of this application with reference to FIG. 9 to FIG. 13.

In embodiments, a terminal device and a network device may be divided into functional modules according to the foregoing methods. For example, each functional module may be obtained through division based on each corresponding function, or two or more functions may be integrated into one processing module. The integrated module may be implemented in a form of hardware. It should be noted that the division into the modules in embodiments is an example and is merely logical function division. During actual implementation, another division manner may be used.

It should be noted that related content of the steps in the foregoing method embodiments may be cited in function descriptions of corresponding functional modules. Details are not described herein again.

The terminal device and the network device provided in embodiments of this application are configured to perform any one of the capability information transmission methods provided in the foregoing method embodiments, and therefore can achieve same effects as the foregoing implementation methods. When an integrated unit is used, the terminal device or the network device may include a processing module, a storage module, and a communication module. The processing module may be configured to: control and manage actions of the terminal device or the network device. For example, the processing module may be configured to support the terminal device or the network device in performing steps performed by a processing unit. The storage module may be configured to support storage of program code, data, and the like. The communication module may be configured to support the terminal device or the network device in communicating with another device.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processing, DSP) and a microprocessor. The storage module may be a storage. The communication module may be specifically a device that interacts with another electronic device, such as a radio frequency circuit, a Bluetooth chip, or a Wi-Fi chip.

For example, FIG. 9 is a block diagram of a communication apparatus 900 according to an embodiment of this application. The communication apparatus 900 may correspond to the network device (for example, the first network device or the second network device) described in the method 400 to the method 800, or may be a chip or a component used in the network device, and modules or units in the communication apparatus 900 are separately configured to perform actions or processing processes performed by the first network device in the method 400 to the method 800.

As shown in FIG. 9, the communication apparatus 900 includes a processing module 910 and an interface module 920. The interface module 920 is configured to perform specific signal receiving and sending under driving of the processing module 910.

The processing module 910 is configured to determine that a terminal device does not support capability filtering.

The interface module 920 is configured to send first capability enquiry information to the terminal device.

The interface module 920 is further configured to receive capability information from the terminal device.

The processing module 910 is further configured to determine, based on the terminal device not supporting the capability filtering, that the capability information includes all frequency band combination capabilities supported by the terminal device.

The communication apparatus provided in this embodiment of this application explicitly or implicitly indicates, to the communication apparatus, that the terminal device supports or does not support a capability filtering enquiry, to help the communication apparatus determine that the terminal device does not support the capability filtering. This ensures that the terminal device and the communication apparatus have a consistent understanding of whether the terminal device supports the capability filtering, and ensures interoperability and compatibility between the terminal device and the communication apparatus. The communication apparatus may determine that the terminal device reports a full capability, so that a secondary capability enquiry may not be performed on the terminal device, thereby reducing communication resource overheads.

In some possible implementations, before sending the first capability enquiry information to the terminal device, the interface module 920 is further configured to receive first indication information from the terminal device, where the first indication information indicates that the terminal device does not support the capability filtering. The processing module 910 is further configured to determine, based on the first indication information, that the terminal device does not support the capability filtering.

In some possible implementations, the first indication information is carried in an RRC connection setup request message or an RRC connection setup complete message.

In some possible implementations, before sending the first capability enquiry information to the terminal device, the interface module 920 is further configured to: send second capability enquiry information to the terminal device, where the second capability enquiry information includes a filter condition, and the filter condition indicates the terminal device to report capability information of the terminal device based on the filter condition; and receive capability enquiry failure information from the terminal device, where the capability enquiry failure information includes indication information indicating that the terminal device does not support the capability filtering. The processing module 910 is further configured to determine, based on the capability enquiry failure information, that the terminal device does not support the capability filtering.

In some possible implementations, the processing module 910 is further configured to determine that the terminal device is a first-type terminal device, where the first-type terminal device is a terminal device that does not support the capability filtering.

In some possible implementations, the first capability enquiry information does not include a filter condition, and the filter condition indicates the terminal device to report capability information of the terminal device based on the filter condition.

In some possible implementations, the filter condition includes a frequency filter condition, and the frequency filter condition indicates the terminal device to report, based on the frequency filter condition, a frequency band combination capability supported by the terminal device.

For example, the frequency filter condition is indicated by a "frequencyBandListFilter" field in the first capability enquiry information (for example, a UE capability enquiry).

In some possible implementations, the capability information does not include a filter condition applied to the terminal device, and that the capability information does not include a filter condition applied to the terminal device indicates that the terminal device does not support the capability filtering. The processing module 910 is further configured to determine, based on the capability information, that the terminal device does not support the capability filtering.

In some possible implementations, the first capability enquiry information includes a filter condition, and the filter condition indicates the terminal device to report capability information of the terminal device based on the filter condition.

In some possible implementations, the filter condition applied to the terminal device includes a frequency filter condition applied to the terminal device, where the frequency filter condition applied to the terminal device is used to filter a frequency band combination capability to be reported by the terminal device.

For example, the frequency filter condition applied to the terminal device is indicated by "appliedFreqBandListFilter" in capability information (for example, UECapabilityInformation).

In some possible implementations, the capability information includes second indication information, the second indication information indicates that the terminal device is a first-type terminal device, and the first-type terminal device is a terminal device that does not support the capability filtering. The processing module 910 is further configured to determine, based on the second indication information, that the terminal device does not support the capability filtering.

In some possible implementations, the capability information includes a frequency filter condition field applied to the terminal device and third indication information, the frequency filter condition field applied to the terminal device indicates all supported bands of the terminal device, and the third indication information indicates that the frequency filter condition field applied to the terminal device indicates all the supported bands of the terminal device. The processing module 910 is further configured to determine, based on the third indication information, that the capability information includes all the frequency band combination capabilities supported by the terminal device.

For example, the frequency filter condition applied to the terminal device is indicated by "appliedFreqBandListFilter" in capability information (for example, UECapabilityInformation).

In some possible implementations, the interface module 920 is further configured to send the capability information to a second network device.

It should be understood that, for a specific process in which the units in the communication apparatus 900 perform the foregoing corresponding steps, refer to the foregoing descriptions related to the first network device with reference to the related embodiments in the method 400 to the method 800. For brevity, details are not described herein again.

Optionally, the interface module 920 may include a receiving unit (module) and a sending unit (module), configured to perform steps of receiving information and sending information by the first network device in embodiments of the method 400 to the method 800.

Further, the communication apparatus 900 may further include a storage unit. The interface module 920 may be a transceiver, an input/output interface, or an interface circuit. The storage unit is configured to store instructions executed by the interface module 920 and the processing module 910. The interface module 920, the processing module 910, and the storage unit are coupled to each other. The storage unit stores instructions. The processing module 910 is configured to execute the instructions stored in the storage unit. The interface module 920 is configured to perform specific signal receiving and sending under driving of the processing module 910.

It should be understood that the interface module 920 may be a transceiver, an input/output interface, or an interface circuit. The storage unit may be a storage. The processing module 910 may be implemented by a processor. As shown in FIG. 10, the communication apparatus 1000 may include a processor 1010, a storage 1020, and a transceiver 1030.

The communication apparatus 900 shown in FIG. 9 or the communication apparatus 1000 shown in FIG. 10 can implement steps performed by the first network device in embodiments of the method 500 to the method 800. For similar descriptions, refer to the descriptions in the foregoing corresponding methods. To avoid repetition, details are not described herein again.

It should be further understood that the communication apparatus 900 shown in FIG. 9 or the communication apparatus 1000 shown in FIG. 10 may be a network device, or a network device may include the communication apparatus 900 shown in FIG. 9 or the communication apparatus 1000 shown in FIG. 10.

It should be further understood that the network device in this application may alternatively be a chip, a chip system, or a processor that supports the network device in implementing the method, or may be a logical node, a logical module, or software that can implement all or some functions of the network device.

FIG. 11 is a block diagram of a communication apparatus 1100 according to an embodiment of this application. The communication apparatus 1100 may correspond to the terminal device described in the method 500 to the method 800, or may be a chip or a component used in the terminal device, and modules or units in the communication apparatus 1100 are separately configured to perform actions or processing processes performed by the terminal device in the method 400 to the method 800.

As shown in FIG. 11, the communication apparatus 1100 includes a processing module 1110 (or may be referred to as a processing unit 1110) and an interface module 1120 (or may be referred to as an interface unit 1120). The interface module 1120 is configured to perform specific signal receiving and sending under driving of the processing module 1110.

The interface module 1120 is configured to receive first capability enquiry information from a first network device.

The interface module 1120 is further configured to send capability information to the first network device in response to the first capability enquiry information, where the capability information includes all frequency band combination capabilities supported by the terminal device.

According to the communication apparatus provided in this embodiment of this application, when a capability of the terminal device is reported to the first network device, capability filtering may not be performed, so that all the frequency band combination capabilities supported by the terminal device are reported to the network device. In this way, implementation complexity of the communication apparatus can be reduced, and costs of the terminal device can be reduced. The network device may either not perform a secondary capability enquiry on the terminal device, thereby reducing signaling overheads and communication resource overheads caused by repeated enquiry and reporting of the capability information of the terminal device.

In some possible implementations, before receiving the first capability enquiry information from the first network device, the interface module 1120 is further configured to send first indication information to the first network device, where the first indication information indicates that the terminal device does not support capability filtering. In this implementation, that the terminal device does not support the capability filtering, a capability reported by the terminal device is the full capability or an unfiltered capability, or the terminal device does not perform a capability filtering procedure is indicated to the network device by using the indication information, so that the network device determines that the terminal device does not support the capability filtering. This ensures that the terminal device and the network device have a consistent understanding of whether the terminal device supports the capability filtering, and ensures interoperability and compatibility between the terminal device and the network device.

**In** some possible implementations, the first indication information is carried in an RRC connection setup request message or an RRC connection setup complete message. In this implementation, existing signaling may be used to carry the indication information, to reduce overheads of the indication information and improve communication resource utilization.

In some possible implementations, before receiving the first capability enquiry information from the first network device, the interface module 1120 is further configured to: receive second capability enquiry information from the first network device, where the second capability enquiry information includes a filter condition, and the filter condition indicates the terminal device to report capability information of the terminal device based on the filter condition; and send capability enquiry failure information to the first network device in response to the second capability enquiry information, where the capability enquiry failure information includes indication information indicating that the terminal device does not support capability filtering. In this implementation, that the terminal device does not support the capability filtering, a capability reported by the terminal device is the full capability or an unfiltered capability, or the terminal device does not perform a capability filtering procedure is indicated to the network device by using the capability enquiry failure information, so that the network device determines that the terminal device does not support the capability filtering. This ensures that the terminal device and the network device have a consistent understanding of whether the terminal device supports the capability filtering, and ensures interoperability and compatibility between the terminal device and the network device.

In some possible implementations, before receiving the first capability enquiry information from the first network device, the interface module 1120 is further configured to send fourth indication information to the first network device, where the fourth indication information indicates that the terminal device is a first-type terminal device, and the first-type terminal device is a terminal device that does not support the capability filtering. In this implementation, it is specified that the first-type terminal device does not perform capability filtering, and the terminal device indicates to the network device that the terminal device is the first-type terminal device, so that the network device determines that the terminal device does not support a band capability. This ensures that the terminal device and the network device have a consistent understanding of whether the terminal device supports the capability filtering, and ensures interoperability and compatibility between the terminal device and the network device. The network device may either not perform a secondary capability enquiry on the terminal device, thereby reducing signaling overheads and communication resource overheads caused by repeated enquiry and reporting of the capability information of the terminal device.

In some possible implementations, the interface module 1120 is further configured to: send a first random access preamble to the first network device, where the first random access preamble indicates that the terminal device is a first-type terminal device;
send a second random access preamble to the first network device on a first random access channel, where a resource location of the first random access channel indicates that the terminal device is a first-type terminal device;
send an RRC connection setup request to the first network device on a first logical channel, where the first logical channel indicates that the terminal device is a first-type terminal device; or
send an RRC connection setup request to the first network device, where the RRC connection setup request includes fourth indication information.

In some possible implementations, the first capability enquiry information does not include a filter condition, and the filter condition indicates the terminal device to report capability information of the terminal device based on the filter condition.

In some possible implementations, the filter condition includes a frequency filter condition, and the frequency filter condition indicates the terminal device to report, based on the frequency filter condition, a frequency band combination capability supported by the terminal device.

For example, the frequency filter condition is indicated by a "frequencyBandListFilter" field in the first capability enquiry information (for example, a UE capability enquiry).

In some possible implementations, the capability information does not include a filter condition applied to the terminal device, and that the capability information does not include a filter condition applied to the terminal device indicates that the terminal device does not support capability filtering. In this implementation, the capability information does not include the filter condition applied to the terminal device, to indicate that the terminal device does not support the capability filtering, so that the network device determines that the terminal device does not support the band capability. This ensures that the terminal device and the network device have a consistent understanding of whether the terminal device supports the capability filtering, and ensures interoperability and compatibility between the terminal device and the network device. The network device may either not perform a secondary capability enquiry on the terminal device, thereby reducing signaling overheads and communication resource overheads caused by repeated enquiry and reporting of the capability information of the terminal device.

In some possible implementations, the first capability enquiry information includes a filter condition, and the filter condition indicates the terminal device to report capability information of the terminal device based on the filter condition.

In some possible implementations, the filter condition applied to the terminal device includes a frequency filter condition applied to the terminal device, where the frequency filter condition applied to the terminal device is used to filter a frequency band combination capability to be reported by the terminal device.

For example, the frequency filter condition applied to the terminal device is indicated by "appliedFreqBandListFilter" in capability information (for example, UECapabilityInformation).

In some possible implementations, the capability information includes second indication information, the second indication information indicates that the terminal device is a first-type terminal device, and the first-type terminal device is a terminal device that does not support capability filtering. In this implementation, it is specified that the first-type terminal device does not perform capability filtering, and the terminal device indicates, to the network device in the capability information, that the terminal device is the first-type terminal device, so that the network device determines that the terminal device does not support a band capability. This ensures that the terminal device and the network device have a consistent understanding of whether the terminal device supports the capability filtering, and ensures interoperability and compatibility between the terminal device and the network device. The network device may either not perform a secondary capability enquiry on the terminal device, thereby reducing signaling overheads and communication resource overheads caused by repeated enquiry and reporting of the capability information of the terminal device.

In some possible implementations, the capability information includes a frequency filter condition field applied to the terminal device and third indication information, the frequency filter condition field applied to the terminal device indicates all supported bands of the terminal device, and the third indication information indicates that the frequency filter condition field applied to the terminal device indicates all the supported bands of the terminal device. In this implementation, the "appliedFreqBandListFilter" field in the capability information is used to carry all the supported bands of the terminal device, and the capability information indicates, by using the indication information, that the "appliedFreqBandListFilter" field carries all the supported bands of the terminal device. This ensures that the terminal device and the network device have a consistent understanding of whether the terminal device supports the capability filtering, and ensures interoperability and compatibility between the terminal device and the network device. In addition, compatibility between the terminal device and the network device can be improved, and a probability of triggering the secondary capability enquiry by the network device (for example, a network device implemented in a 3GPP R17 protocol version) is reduced to some extent.

Further, the communication apparatus 1100 may further include a storage module (unit), and the interface module (unit) 1120 may be a transceiver, an input/output interface, or an interface circuit. The storage unit is configured to store instructions executed by the interface module 1120 and the processing module 1110. The processing module 1110, the interface module 1120, and the storage unit are coupled to each other. The storage unit stores the instructions. The processing module 1110 is configured to execute the instructions stored in the storage unit. The interface module 1120 is configured to perform specific signal receiving and sending under driving of the processing module 1110.

It should be understood that, for a specific process in which the units in the communication apparatus 1100 perform the foregoing corresponding steps, refer to the foregoing descriptions related to the terminal device with reference to the related embodiments in the method 400 to the method 800. For brevity, details are not described herein again.

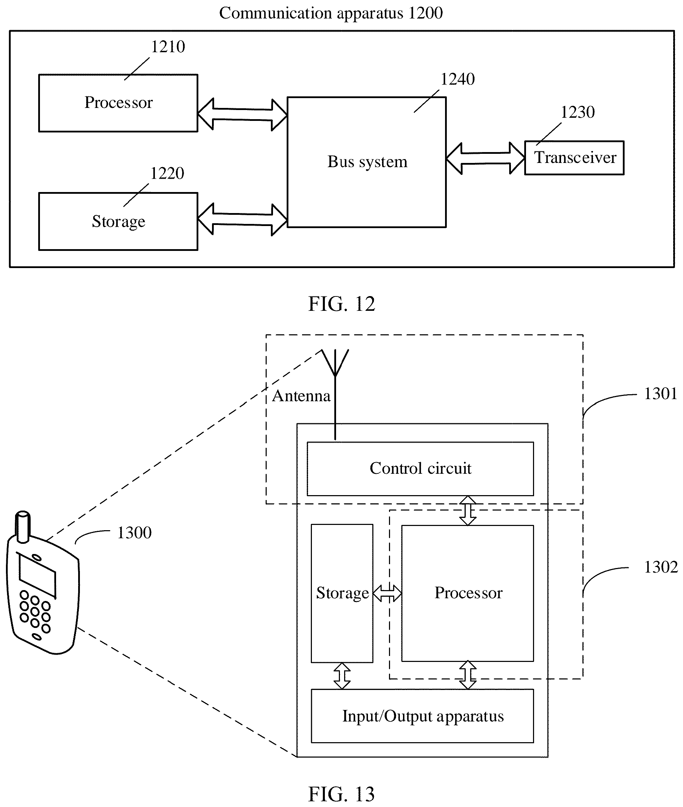

It should be understood that the interface module 1120 may be a transceiver, an input/output interface, or an interface circuit. The storage unit may be a storage. The processing module 1110 may be implemented by a processor. As shown in FIG. 12, the communication apparatus 1200 may include a processor 1210, a storage 1220, a transceiver 1230, and a bus system 1240. Components of the communication apparatus 1200 are coupled together by using a bus system 1240. In addition to a data bus, the bus system 1240 may further include a power bus, a control bus, a status signal bus, and the like. However, for clear description, various types of buses in FIG. 12 are marked as the bus system 1240. For ease of representation, FIG. 12 is merely an example.

The communication apparatus 1100 shown in FIG. 11 or the communication apparatus 1200 shown in FIG. 12 can implement steps performed by the terminal device in embodiments of the method 400 to the method 800. For similar descriptions, refer to the descriptions in the foregoing corresponding methods. To avoid repetition, details are not described herein again.

It should be further understood that the communication apparatus 1100 shown in FIG. 11 or the communication apparatus 1200 shown in FIG. 12 may be a terminal device, or a terminal device may include the communication apparatus 1100 shown in FIG. 11 or the communication apparatus 1200 shown in FIG. 12.

It should be further understood that the terminal device in this application may alternatively be a chip, a chip system, a processor, or the like that supports the terminal device in implementing the method. This is not limited in embodiments of this application.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a storage in a form of a program, and a processing element of the apparatus invokes the program to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

In an example, the unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. In another example, the units may be integrated together and implemented in a form of a system-on-a-chip (system-on-a-chip, SoC).

FIG. 13 is a diagram of a structure of a terminal device 1300 according to this application. The foregoing communication apparatus 1100 or communication apparatus 1200 may be configured in the terminal device 1300. Alternatively, the foregoing communication apparatus 1100 or communication apparatus 1200 may be the terminal device 1300. In other words, the terminal device 1300 may perform actions performed by the terminal device in the method 400 to the method 800. Optionally, for ease of description, FIG. 13 shows only main components of the terminal device. As shown in FIG. 13, the terminal device 1300 includes a processor, a storage, a control circuit, an antenna, and an input/output apparatus.

The processor is mainly configured to: process a communication protocol and communication data, control the entire terminal device, execute a software program, and process data of the software program, for example, is configured to support the terminal device in performing actions described in embodiments of the foregoing capability information transmission methods. The storage is mainly configured to: store the software program and the data, for example, store a codebook described in the foregoing embodiments. The control circuit is mainly configured to: convert a baseband signal and a radio frequency signal and process the radio frequency signal. The control circuit and the antenna together may also be referred to as a transceiver, and are mainly configured to: receive and send a radio frequency signal in a form of an electromagnetic wave. The input/output apparatus, such as a touchscreen, a display, or a keyboard, is mainly configured to: receive data input by a user and output data to the user.

After the terminal device is powered on, the processor may read the software program in a storage unit, explain and execute instructions of the software program, and process the data of the software program. When data needs to be sent in a wireless manner, the processor performs baseband processing on the to-be-sent data, and then outputs a baseband signal to a radio frequency circuit. The radio frequency circuit performs radio frequency processing on the baseband signal, and then sends a radio frequency signal to the outside in the form of the electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 13 shows only one storage and one processor. An actual terminal device may have a plurality of processors and a plurality of storages. The storage may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 13 integrates functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, the terminal device may include a plurality of central processing units to enhance a processing capability of the terminal device, and the components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of the software program, and the processor executes the software program to implement a baseband processing function.

For example, in this embodiment of this application, the antenna and the control circuit that have receiving and sending functions may be considered as a transceiver unit 1301 of the terminal device 1300, and the processor having a processing function may be considered as a processing unit 1302 of the terminal device 1300. As shown in FIG. 13, the terminal device 1300 includes the transceiver unit 1301 and the processing unit 1302. The transceiver unit may also be referred to as a transceiver, a transceiver device, a transceiver apparatus, or the like. Optionally, a device that is in the transceiver unit 1301 and that is configured to implement a receiving function may be considered as a receiving unit, and a device that is in the transceiver unit 1301 and that is configured to implement a sending function may be considered as a sending unit. That is, the transceiver unit 1301 includes the receiving unit and the sending unit. For example, the receiving unit may also be referred to as a receiver, a receiver device, or a receiver circuit, and the sending unit may also be referred to as a transmitter, a transmitter device, or a transmitter circuit.

It should be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the storage in this embodiment of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of random access memories (random access memory, RAM) are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedures or the functions according to embodiments of this application are all or partially generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a communication system. The communication system includes the foregoing terminal device and the foregoing network device (the first network device, or the first network device and the second network device).

Optionally, the communication system further includes a core network device.

An embodiment of this application further provides a computer-readable medium, configured to store computer program code. A computer program includes instructions used to perform the capability information transmission methods in embodiments of this application in the method 400 to the method 800. The readable medium may be a read-only memory (read-only memory, ROM) or a random access memory (random access memory, RAM). This is not limited in embodiments of this application.

This application further provides a computer program product. The computer program product includes instructions. When the instructions are executed, a terminal device is caused to perform an operation of the terminal device corresponding to the foregoing method, or a network device (a first network device or a second network device) is caused to perform an operation of the network device corresponding to the foregoing method.

An embodiment of this application further provides a system chip. The system chip includes a processing unit and a communication unit. The processing unit may be, for example, a processor, and the communication unit may be, for example, an input/output interface, a pin, or a circuit. The processing unit may execute computer instructions, so that a chip in a communication apparatus performs any of the capability information transmission methods provided in the foregoing embodiments of this application.

Optionally, any communication apparatus provided in embodiments of this application may include the system chip.

Optionally, the computer instructions are stored in a storage unit.

Optionally, the storage unit is a storage unit in the chip, for example, a register or a cache. Alternatively, the storage unit may be a storage unit that is in a terminal and that is located outside the chip, for example, a ROM or another type of static storage device that can store static information and instructions, or a RAM. The processor described above may be a CPU, a microprocessor, an ASIC, or one or more integrated circuits configured to control execution of a program for the foregoing master system information transmission methods. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the storage may be coupled to the same device.

It may be understood that the storage in embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of random access memories (random access memory, RAM) are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The term "uplink" or "downlink" in this application is used to describe a data/information transmission direction in a specific scenario. For example, an "uplink" direction is usually a direction in which data/information is transmitted from a terminal to a network side, or a direction in which data/information is transmitted from a distributed unit to a central unit; and a "downlink" direction is usually a direction in which data/information is transmitted from a network side to a terminal, or a direction in which data/information is transmitted from a central unit to a distributed unit. It can be understood that "uplink" or "downlink" is merely used to describe a data/information transmission direction, without limiting a specific starting or ending device of data/information transmission.

In this application, names may be assigned to various objects such as messages/information/devices/network elements/systems/apparatuses/actions/operations/procedures/concepts. It can be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

A person of ordinary skill in the art may be aware that all or some of the methods in embodiments of this application may be implemented by using software, hardware, firmware, or any combination thereof. When software is used to implement embodiments, embodiments may be implemented completely or partially in a form of a computer program product. The computer program product includes one or more computer programs or instructions. When the computer programs or the instructions are loaded and executed on a computer, the procedures or the functions according to embodiments of this application are all or partially implemented. The computer may be a general-purpose computer, a dedicated computer, a computer network, or another programmable apparatus. The computer programs or the instructions may be stored in a computer-readable storage medium, or may be transmitted by using a computer-readable storage medium. The computer-readable storage medium may be any usable medium accessible by the computer, or a data storage device such as a server integrating one or more usable media.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

In several embodiments provided in this application, it should be understood that the disclosed system, apparatus, and method may be implemented in another manner. For example, the described apparatus embodiments are merely examples. For example, division into the units is merely logical function division, and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, in other words, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solution of this application essentially, or the part contributing to the conventional technology, or some of the technical solution may be implemented in a form of a software product. The computer software product is stored in a storage medium, and includes several instructions for indicating a computer device (which may be a personal computer, a server, a network device, or the like) to perform all or some of the steps in the methods described in embodiments of this application. The storage medium includes a USB flash drive, a removable hard disk, a read-only memory (read-only memory, ROM), or random access.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A capability information transmission method, wherein the method is applicable to a first network device or a chip in the first network device, and the method comprises:
determining that a terminal device does not support capability filtering;
sending first capability enquiry information to the terminal device;
receiving capability information from the terminal device; and
determining, based on the terminal device not supporting the capability filtering, that the capability information comprises all frequency band combination capabilities supported by the terminal device.

2. The method according to claim 1, wherein before sending the first capability enquiry information to the terminal device, the method further comprises:
receiving first indication information from the terminal device, wherein the first indication information indicates that the terminal device does not support the capability filtering; and
determining that the terminal device does not support the capability filtering comprises:
determining, based on the first indication information, that the terminal device does not support the capability filtering.

3. The method according to claim 2, wherein the first indication information is carried in an RRC connection setup request message or an RRC connection setup complete message.

4. The method according to claim 1, wherein before sending the first capability enquiry information to the terminal device, the method further comprises:
sending second capability enquiry information to the terminal device, wherein the second capability enquiry information comprises a filter condition, and the filter condition indicates the terminal device to report capability information of the terminal device based on the filter condition; and
receiving capability enquiry failure information from the terminal device, wherein the capability enquiry failure information comprises indication information indicating that the terminal device does not support the capability filtering; and
determining that the terminal device does not support the capability filtering comprises:
determining, based on the capability enquiry failure information, that the terminal device does not support the capability filtering.

5. The method according to claim 1, wherein determining that the terminal device does not support the capability filtering comprises:
determining that the terminal device is a first-type terminal device, wherein the first-type terminal device is a terminal device that does not support the capability filtering.

6. The method according to any one of claims 1 to 5, wherein the first capability enquiry information does not comprise a filter condition, and the filter condition indicates the terminal device to report capability information of the terminal device based on the filter condition.

7. The method according to claim 4 or 6, wherein the filter condition comprises a frequency filter condition, and the frequency filter condition indicates the terminal device to report, based on the frequency filter condition, a frequency band combination capability supported by the terminal device.

8. The method according to claim 1, wherein the capability information does not comprise a filter condition applied to the terminal device, and that the capability information does not comprise the filter condition applied to the terminal device indicates that the terminal device does not support the capability filtering; and
determining that the terminal device does not support the capability filtering comprises:
determining, based on the capability information, that the terminal device does not support the capability filtering.

9. The method according to claim 8, wherein the first capability enquiry information comprises a filter condition, and the filter condition indicates the terminal device to report capability information of the terminal device based on the filter condition.

10. The method according to claim 8 or 9, wherein the filter condition applied to the terminal device comprises a frequency filter condition applied to the terminal device, wherein the frequency filter condition applied to the terminal device is used to filter a frequency band combination capability to be reported by the terminal device.

11. The method according to claim 1, wherein the capability information comprises second indication information, the second indication information indicates that the terminal device is a first-type terminal device, and the first-type terminal device is a terminal device that does not support the capability filtering; and
determining that the terminal device does not support the capability filtering comprises:
determining, based on the second indication information, that the terminal device does not support the capability filtering.

12. The method according to claim 1, wherein the capability information comprises a frequency filter condition field applied to the terminal device and third indication information, the frequency filter condition field applied to the terminal device indicates all supported bands of the terminal device, and the third indication information indicates that the frequency filter condition field applied to the terminal device indicates all the supported bands of the terminal device; and
determining that the terminal device does not support the capability filtering comprises:
determining, based on the third indication information, that the capability information comprises all the frequency band combination capabilities supported by the terminal device.

13. The method according to any one of claims 1 to 12, wherein the method further comprises: sending the capability information to a second network device.

14. A capability information transmission method, wherein the method is applicable to a terminal device or a chip in the terminal device, and the method comprises:
receiving first capability enquiry information from a first network device; and
sending capability information to the first network device in response to the first capability enquiry information, wherein the capability information comprises all frequency band combination capabilities supported by the terminal device.

15. The method according to claim 14, wherein before receiving the first capability enquiry information from the first network device, the method further comprises:
sending first indication information to the first network device, wherein the first indication information indicates that the terminal device does not support capability filtering.

16. The method according to claim 15, wherein the first indication information is carried in an RRC connection setup request message or an RRC connection setup complete message.

17. The method according to claim 14, wherein before receiving the first capability enquiry information from the first network device, the method further comprises:
receiving second capability enquiry information from the first network device, wherein the second capability enquiry information comprises a filter condition, and the filter condition indicates the terminal device to report capability information of the terminal device based on the filter condition; and
sending capability enquiry failure information to the first network device in response to the second capability enquiry information, wherein the capability enquiry failure information comprises indication information indicating that the terminal device does not support capability filtering.

18. The method according to claim 14, wherein before receiving the first capability enquiry information from the first network device, the method further comprises:
sending fourth indication information to the first network device, wherein the fourth indication information indicates that the terminal device is a first-type terminal device, and the first-type terminal device is a terminal device that does not support capability filtering.

19. The method according to any one of claims 14 to 18, wherein the first capability enquiry information does not comprise a filter condition, and the filter condition indicates the terminal device to report capability information of the terminal device based on the filter condition.

20. The method according to claim 17 or 19, wherein the filter condition comprises a frequency filter condition, and the frequency filter condition indicates the terminal device to report, based on the frequency filter condition, a frequency band combination capability supported by the terminal device.

21. The method according to claim 14, wherein the capability information does not comprise a filter condition applied to the terminal device, and that the capability information does not comprise the filter condition applied to the terminal device indicates that the terminal device does not support capability filtering.

22. The method according to claim 21, wherein the first capability enquiry information comprises a filter condition, and the filter condition indicates the terminal device to report capability information of the terminal device based on the filter condition.

23. The method according to claim 21 or 22, wherein the filter condition applied to the terminal device comprises a frequency filter condition applied to the terminal device, wherein the frequency filter condition applied to the terminal device is used to filter a frequency band combination capability to be reported by the terminal device.

24. The method according to claim 14, wherein the capability information comprises second indication information, the second indication information indicates that the terminal device is a first-type terminal device, and the first-type terminal device is a terminal device that does not support capability filtering.

25. The method according to claim 14, wherein the capability information comprises a frequency filter condition field applied to the terminal device and third indication information, the frequency filter condition field applied to the terminal device indicates all supported bands of the terminal device, and the third indication information indicates that the frequency filter condition field applied to the terminal device indicates all the supported bands of the terminal device.

26. A communication apparatus, comprising a processor, wherein the processor is coupled to a storage, and the storage is configured to store a program or instructions; and when the program or the instructions are executed by the processor, the apparatus is caused to perform the method according to any one of claims 1 to 13 or the method according to any one of claims 14 to 25.

27. A computer-readable storage medium, wherein the computer-readable storage medium stores a computer program, and the computer program comprises program instructions; and when the program instructions are executed by a processor, the processor is caused to perform the method according to any one of claims 1 to 13 or the method according to any one of claims 14 to 25.

28. A chip, comprising a processor, configured to: invoke a computer program from a storage and run the computer program, to cause a communication device on which the chip is installed to perform the method according to any one of claims 1 to 13 or the method according to any one of claims 14 to 25.
